(19) **Europäisches Patentamt / European Patent Office / Office européen des brevets**

(11) **EP 3 637 676 B1**

(12) # EUROPEAN PATENT SPECIFICATION

(45) Date of publication and mention of the grant of the patent:
**26.02.2025 Bulletin 2025/09**

(21) Application number: **18813568.5**

(22) Date of filing: **28.05.2018**

(51) International Patent Classification (IPC):
**H04L 12/10** *(2006.01)* **H04M 19/08** *(2006.01)*

(52) Cooperative Patent Classification (CPC):
**H04M 19/08; H04L 12/10;** Y02D 30/70

(86) International application number:
**PCT/CN2018/088714**

(87) International publication number:
**WO 2018/223863 (13.12.2018 Gazette 2018/50)**

(54) **CENTRAL OFFICE EQUIPMENT, AND REVERSE POWER SUPPLY SYSTEM AND METHOD**

ZENTRALE BÜROVORRICHTUNG SOWIE UMKEHRSTROMVERSORGUNGSSYSTEM UND -VERFAHREN

ÉQUIPEMENT DE BUREAU CENTRAL, ET PROCÉDÉ ET SYSTÈME D'ALIMENTATION ÉLECTRIQUE INVERSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2017 CN 201710424370**

(43) Date of publication of application:
**15.04.2020 Bulletin 2020/16**

(73) Proprietor: **ZTE Corporation**
**Shenzhen, Guangdong 518057 (CN)**

(72) Inventor: **TANG, Rongdao**
**Shenzhen**
**Guangdong 518057 (CN)**

(74) Representative: **WBH Wachenhausen Patentanwälte PartG mbB et al**
**Müllerstraße 40**
**80469 München (DE)**

(56) References cited:
**EP-A1- 2 773 063      EP-A1- 2 830 302**
**EP-A1- 2 911 339      EP-A1- 3 089 438**
**WO-A1-2015/188489      CN-A- 102 571 502**
**CN-A- 102 571 502      CN-A- 103 051 462**
**CN-A- 103 221 832      CN-A- 103 403 563**
**CN-A- 103 814 552      CN-A- 104 041 001**
**CN-A- 105 227 212      US-A1- 2016 309 045**

• **ZHUANG, ZHANHAI ET AL.: "Research on the Application of Reverse PoE", TELECOMMUNICATIONS SCIENCE, 28 February 2014 (2014-02-28), pages 152 - 155, XP055656014**

## Description

### Field of the Invention

The present disclosure relates to, but is not limited to, the technical field of wired communication, and in particular, to a central office equipment, and a reverse power supply system and method.

### Background of the Invention

Supplying power to central office equipment through a network terminal (e.g., a user terminal) is referred to as reverse power supply. A complete reverse power supply system includes one or more pieces of user terminal Power Sourcing Equipment (PSE for short) and a central office Powered Device (PD for short, hereinafter referred to as central office equipment).

European patent application EP2911339A provides a line detection processing method and a device. The line detection processing method in the present invention includes: detecting, by using a detection circuit, whether reverse power supply on a twisted pair line is discontinued; if the reverse power supply on the twisted pair line is discontinued, triggering a status switch to switch from a normal power supply state to a backup power supply state, so as to simultaneously trigger a line detection module and an energy storage capacitor; and performing detection on the twisted pair line between the line detection module and a user equipment by using the line detection module, and supplying power to the line detection module by using the energy storage capacitor. By using the method, a fiber to the distribution point device can perform detection on a twisted pair line if reverse power supply is discontinued.

European patent application EP3089438A1 relates to remote power feeding of access nodes from subscriber premises for broadband communication services. In accordance with an embodiment of the invention, a power sourcing equipment (300) comprises a power injector (320) configured to generate a power feeding signal (DC_SIGNAL) from a power source (640) for remote power feeding of an access node (100) through a subscriber loop (610). The power sourcing equipment further comprises a detector (340) configured to detect a power outage of the power source. The power injector is further configured, upon detection of the power outage, to generate an imminent failure indication signal (DG_SIGNAL) by at least one polarity inversion of the power feeding signal for further detection by the access node. The present invention also relates to an access node (100) configured to detect such at least one polarity inversion.

Chinese patent application CN102571502 A provides terminal access equipment and a reverse power over Ethernet (PoE) state detection method. The terminal access equipment comprises a powered device (PD), a plurality of Ethernet interfaces connected with the PD, a power supply state detection circuit and a control circuit, wherein the power supply state detection circuit is used for detecting the power supply state of a power module of power supply equipment (PSE) connected with the terminal access equipment through an Ethernet interface, and outputting a detection result to a control module; the control circuit is used for receiving the detection result output by the power supply state detection circuit; when the detection result indicates normal power supply, the control circuit enables the Ethernet two-way data forwarding function of the Ethernet interface on a corresponding terminal of the power module of the PSE; and when the detection result indicates abnormal power supply, the control circuit disables the Ethernet two-way data forwarding function of the Ethernet interface on the corresponding terminal of the power module of the PSE. By the equipment and the method, the phenomenon that a user privately switches off the power module of the PSE at home can be effectively controlled and prevented, so that the stability of the power supply of reverse PoE can be ensured.

United states patent application US2016/309045A1 provides a reverse power feeding system for supplying power from a plurality of first devices to a second device, a first set of the plurality of first devices each being powered by a first type power source and a second set of the plurality of first devices each being powered by a second type power source different than the first type power source, the system constituted of: a plurality of power paths, each of the plurality of power paths arranged to transfer DC power between a respective one of the plurality of first devices and the second device; and a control circuitry, the control circuitry arranged to adjust the amount of power supplied by each of the second set of the plurality of first devices over the power paths responsive to the total amount of power supplied by the first set of the plurality of first devices over the power paths.

European patent application EP2773063A1 provides a power supply method, a current equalization module, and a power supply system. The power supply method includes detecting, by the current equalization module, currents of at least two power supply lines; equalizing the currents of the at least two power supply lines based on the intensity of the currents that have been detected in order to enable the currents of at least two power supply lines to have the same intensity; sending the equalized currents to a voltage converter where the voltage corresponding to the equalized currents is converted to supply power to a terminal device. According to the present invention, currents have been equalized before arriving at a voltage converter (that is, a DC/DC module), so that only one voltage converter (that is, one DC/DC module) is used even in the case of large power output, which reduces the number of required voltage converters (that is, DC/DC modules) and thereby reduces the costs.

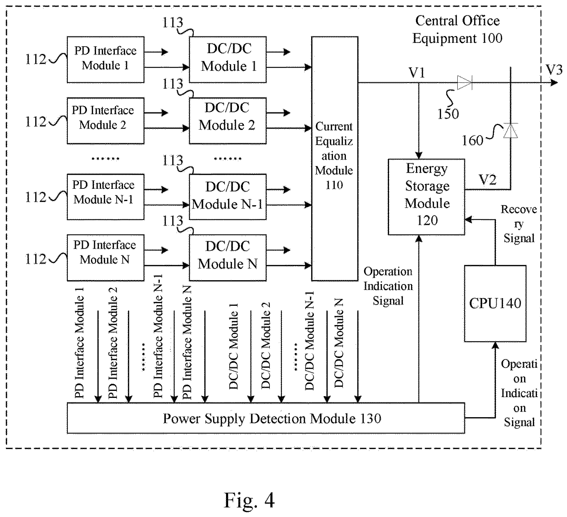

European patent application EP2830302A1 discloses that, to initiate the transmission of electrical power over a telecommunications connection 14 from a power-collecting telecommunications interface unit 16 such as a customer premises equipment, connectable to a power supply 18, to a power-receiving unit (22, Fig 4) such as a kerbside electrical/optical interface, when a connection 14 is first established, or the collecting unit is first powered up, or in order to re-establish connection after a power outage, control signals are transmitted between low-power modems 55 in the interface units using a low-power communications protocol. This allows the controlled initiation of a larger power output and a higher speed exchange of data once the full telecommunications connection has been established. A low-powered beacon signal is transmitted over the telecommunications connection 14 by the power-collecting telecommunications interface unit on connection to a power supply 18, for detection by the power-receiving telecommunications interface unit. In the event of a loss of power at the input 18, the low power modem 55 initiates power management control signals to cause the power-receiving telecommunications interface to shut down certain functions in order to preserve backup power for essential "lifeline" services.

## Summary of the Invention

The following is a summary of the subject matter described in detail in this disclosure, and this summary is not intended to limit the protection scope of the claims.

Embodiments of the present disclosure provide a central office equipment according to claim 1, a reverse power supply system according to claim 9 and a reverse power supply method according to claim 10.

Embodiments of the present disclosure further provide a computer readable storage medium according to claim 14.

After reading and understanding the accompanying drawings and detailed descriptions, other aspects can be understood.

## Brief Description of the Drawings

Fig. 1 is a structural schematic diagram of a reverse power supply system;

Fig. 2 is a structural schematic diagram of a central office equipment according to an embodiment of the present disclosure;

Fig. 3 is a structural schematic diagram of another central office equipment according to an embodiment of the present disclosure;

Fig. 4 is a structural schematic diagram of yet another central office equipment according to an embodiment of the present disclosure;

Fig. 5 is structural schematic diagram of still another central office equipment according to an embodiment of the present disclosure;

Fig. 6 is a logic schematic diagram of a power supply detection module in a central office equipment according to an embodiment of the present disclosure;

Fig. 7 is a structural schematic diagram of an energy storage module in a central office equipment according to an embodiment of the present disclosure;

Fig. 8 is a structural schematic diagram of another energy storage module in a central office equipment according to an embodiment of the present disclosure;

Fig. 9 is a structural schematic diagram of a DC/DC buck converter in a central office equipment according to an embodiment of the present disclosure;

Fig. 10 is a structural schematic diagram of a reverse power supply system according to an embodiment of the present disclosure;

Fig. 11 is a flowchart of a reverse power supply method according to an embodiment of the present disclosure; and

Fig. 12 is a flowchart of another reverse power supply method according to an embodiment of the present disclosure.

## Detailed Description of Embodiments

The embodiments of the present disclosure will be described in detail below with reference to the accompanying drawings.

The steps shown in the flowcharts of the accompanying drawings may be performed in a computer system, such as a set of computer-executable instructions. Moreover, although logical sequences are shown in the flowcharts, in some cases, the shown or described steps may be performed in a different sequence than those shown here.

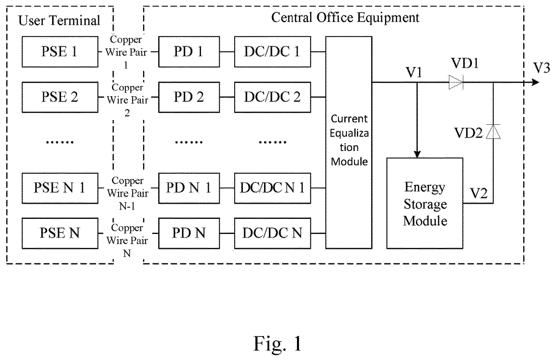

Fig. 1 is a structural schematic diagram of a reverse power supply system. The reverse power supply system is usually applied to a scenario of multi-port reverse power supply in which N pieces of PSEs in Fig. 1 are connected in one-to-one correspondence with N power supply ports of the central office equipment through copper wires, and the N pieces of PSEs supply power to the central office equipment. In a single-port power supply mode, supplying power by one piece of PSE usually cannot meet the full-load operation of the central office equipment. At the moment, the central office equipment shuts down a port amplifier and a common module corresponding to those inactive PSEs, that is, the central office equipment performs a power consumption reduction processing during the single-port power supply mode. However, the process of performing a power consumption reduction processing by the central office equipment requires a certain amount of time, and at the moment when a multi-port power supply mode is switched to the single-port power supply mode, the single-port PSE for power supply may turn off the output voltage due to overcurrent or overload for more than a certain period of time, which may cause a phenomenon that the central office equipment is rebooted due to insufficient power supply, thereby causing the single-port PSE unable to carry out normal business. In addition, since the PSE has the possibility of being frequently powered on and off and being frequently plugged and unplugged copper wires, it may cause a situation where the central office equipment is frequently booted up when the multi-port power supply mode is switched to the single-port power supply mode.

Before describing the central office equipment, and the reverse power supply method and system provided by the embodiments of the present disclosure, the working principle of the reverse power supply system is briefly introduced. Referring to a reverse power supply system shown in Fig. 1, in the system, N pieces of PSEs supply power to the central office equipment, and PD interface chips connected to the power supply ports of the central office equipment, in the case of a successful handshake, cause Direct-Current to Direct-Current (DC/DC) converters through a related standard protocol to generate direct-current power sources required by the central office equipment, and a current equalization module evenly distributes the power required by the central office equipment to each PSE. If some of the PSEs have no output, their corresponding PD interface chips are in the off state and do not participate in the even distribution of power.

As the number of coupled PSEs increases, the total power consumption required by the central office equipment increases accordingly. The reverse power supply is developed based on the standard of Power Over Ethernet (POE for short), and the PSEs providing reverse power sources serve as Limited Power Sources (LPS for short) and their output powers are usually limited.

The function of an energy storage module in the system shown in Fig. 1 is to maintain the normal operation of the central office equipment for a period of time at the moment when all PSEs no longer supply power to it, so that the central office equipment can report Dying Gasp and other information to upper level equipment. In a normal condition, the power source voltage V1 output by the current equalization module is slightly greater than the power source voltage V2 of the energy storage module. In this case, the power source voltage output by the energy storage module is in a no-load state due to the reverse bias of a diode VD2, and the power source voltage V3 required by the central office equipment is provided by V1. Under the condition that the multi-port power supply mode is switched to the single-port power supply mode, once a certain PSE is overcurrent or overload, the power source voltage V1 will drop to less than the power source voltage V2 such that, at the moment, a diode VD1 is reversely biased, VD2 is turned on, and the power source voltage V3 required by the central office equipment is provided by V2 outputted by the energy storage module. According to the above working principle, when the energy storage module provides the output of the power source voltage V2, the PSE has been in an overcurrent or overload state. Because the time required by the central office equipment to perform a power consumption reduction processing is usually greater than the overcurrent or overload protection time required by the POE standard, the voltage output will be cut off due to overcurrent or overload of the single-port PSE, thereby causing the central office equipment to be rebooted due to insufficient power supply. That is, under the condition that the multi-port power supply mode is switched to the single-port power supply mode, the existing energy storage module cannot protect the central office equipment from overcurrent or overload so as to maintain the normal operation. In addition, since the PSE has the possibility of being frequently powered on and off and being frequently plugged and unplugged copper wires, it may cause a situation where the central office equipment is frequently booted up when the multi-port power supply mode is switched to the single-port power supply mode.

Therefore, a central office equipment, and a reverse power supply system and method are provided to solve the problem that the central office equipment is frequently rebooted due to an insufficient instantaneous power supply in the case of switching from the multi-port power supply mode to the single-port power supply mode.

The technical solution of the present disclosure will be described in detail below through the embodiments. A central office equipment in the following embodiments of the present disclosure is a central office powered device in a reverse power supply system, and the central office equipment remains a normal operation state through the power source voltage provided by PSEs which are connected thereto and in a working state. The following embodiments provided in the present disclosure can be combined with each other, and the same or similar concepts or processes may be no longer described in detail in some embodiments.

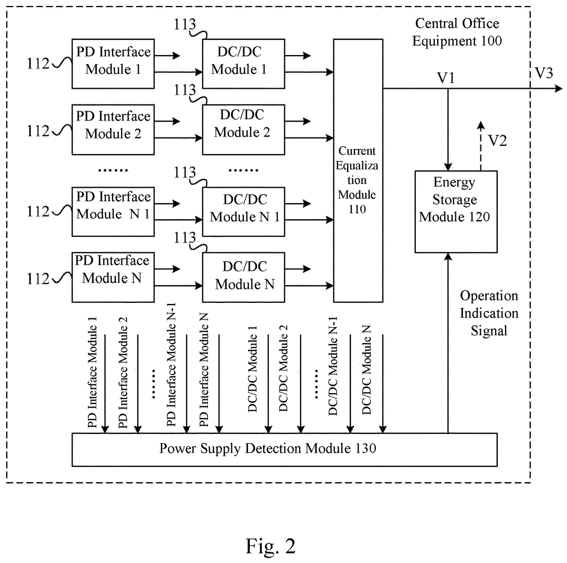

Fig. 2 is a structural schematic diagram of a central office equipment according to an embodiment of the present disclosure. The central office equipment provided by the embodiment of the present disclosure is applicable to the situation where the power source voltage is obtained through reverse power supply in a reverse power supply system, and the central office equipment is implemented through hardware in conjunction with software. As shown in Fig. 2, a central office equipment 100 provided by the embodiment of the present disclosure may include a current equalization module 110, an energy storage module 120 and a power supply detection module 130, the current equalization module 110 being provided with a plurality of power supply ports, and a PD interface module 112 and a DC/DC module 113 being sequentially connected between a PSE and a power supply port in a reverse power supply system;

In the embodiment, the current equalization module 110 is configured to evenly distribute the power source power of the central office equipment 110 to each of the PSEs for reverse power supply.

The central office equipment provided by the embodiment of the present disclosure is a central office powered device in a reverse power supply system, and the power source voltage is provided to the central office equipment by the PSEs which are connected to it and in a working state. The central office equipment is provided with a plurality of power supply ports each corresponding to one piece of PSE. In a practical application, the plurality of power supply ports may be arranged at an input end of the current equalization module, and a PD interface module and a DC/DC module are sequentially connected between each set of PSE and its corresponding power supply port.

In an embodiment of the present disclosure, the power source power required by the central office equipment is usually large, and the current equalization module may evenly distribute the power source power to each of the PSEs for reverse power supply based on the working state of the PSE connected to each power supply port. For example, the current equalization module has 8 power supply ports, which are connected in one-to-one correspondence with 8 pieces of PSEs, and the 8 pieces of PSEs are all in a normal working state. The power source voltage required by the central office equipment in a full-load working state is 40W, and thus each PSE only needs to provide an output voltage of about 5W. The PD interface module in the embodiment of the present disclosure may provide the output voltage to the central office equipment through a related standard protocol in the case of a successful handshake; the DC/DC module is configured to convert the output voltage provided by the PSE into a bus voltage required by the central office equipment; and the current equalization module distributes the source power evenly to the central office equipment. For example, the voltage output by the PSE is 57V and is input to the DC/DC module through the PD interface module; then the DC/DC module outputs a power source of 12V; and the power is evenly distributed to the central office equipment through the current equalization module.

The power supply detection module 130 is connected to the energy storage module 120, each of the PD interface modules 112 and each of the DC/DC modules 113, respectively. The power supply detection module 130 is configured to monitor, in real time, operation statuses of each of the PD interface modules 112 and each of the DC/DC modules 113, and to output an operation indication signal to the energy storage module 120 when it is monitored that the central office equipment 100 is in a single-port power supply state or a power-down state.

In an embodiment of the present disclosure, each PD interface module and each DC/DC module are respectively connected to an input end of the power supply detection module, and the energy storage module is connected to an output end of the power supply detection module. Since each power supply port of the central office equipment corresponds to a set of a PD interface module and a DC/DC module, the power supply detection module may monitor the operation status of the PD interface module and the DC/DC module corresponding to each power supply port. As long as the operation status of either of the PD interface module and the DC/DC module is monitored to be in an abnormal state, the power supply port corresponding to the abnormal state is determined to be abnormal. In a multi-port power supply mode, if only one power supply port was normal for power supply in a moment, or if all power supply ports did not supply power any longer (that is, the central office equipment is in a power-down state), then at this time, the power supply detection module outputs an operation indication signal to the energy storage module so as to control the energy storage module and notify a CPU of the central office equipment to perform a corresponding processing, thereby avoiding the problem that the central office equipment is rebooted due to the overcurrent or overload of a single-port PSE.

The energy storage module 120 is configured to control the output voltage V2 of the energy storage module 120, according to the operation indication signal, to supply power to the central office equipment 100.

In an embodiment of the present disclosure, when receiving the operation indication signal output by the power supply detection module, the energy storage module knows that the power supply port of the central office equipment is in an abnormal state, for example, the central office equipment being in a single-port power supply state or a power-down state. At the moment, a corresponding processing needs to be carried out to the power supply mode of the central office equipment, that is, the central office equipment may turn to be supplied through an output voltage of the energy storage module.

The embodiments of the present disclosure do not limit the implementation mode of supplying power to the central office equipment through the output voltage of the energy storage module. For example, the output voltage of the energy storage module may be used independently to supply power to the central office equipment; for another example, the output voltage of the energy storage module and the output voltage of the single-port PSE may be used simultaneously in terms of a certain ratio to supply power to the central office equipment. According to the standard relevant to POE, at the moment, the single-port PSE only needs to maintain a certain amount of small current to avoid entering an idle state.

In the existing reverse power supply system, when the multi-port power supply mode is switched to the single-port power supply mode, the energy storage module of the central office equipment cannot sense that the central office equipment is in a single-port power supply mode. At this time, majority of the power supply ports have been powered down, but V1 is not powered down yet due to the delay. Only when V1 is powered down, can it be known that some power supply ports have been powered down. As a result, when the single-port PSE cuts off the output voltage due to overcurrent or overload, the central office equipment will be rebooted due to insufficient power supply so that the single-port PSE cannot carry out the normal business. In contrast, once the central office equipment provided by the embodiment of the present disclosure monitors an abnormal power supply state of a power supply port, the power supply detection module immediately sends a prompt signal (i.e., an operation indication signal) to the energy storage module. In this way, when an abnormal state occurs, the energy storage module can be timely notified that an abnormal state occurs in the power supply port, which is beneficial to the corresponding processing of the energy storage module to ensure the stable power supply of the central office equipment.

In the central office equipment provided by the embodiment of the present disclosure, the working states of each PD interface module and each DC/DC module may be monitored in real time by providing in the central office equipment a power supply detection module respectively connected to the energy storage module, each of the PD interface modules and each of the DC/DC modules. When it is monitored that the central office equipment is in a single-port power supply state or a power-down state, an operation indication signal is output to the energy storage module so as to apply the output voltage of the energy storage module as supply power to the central office equipment. In this way, it can be ensured that when an abnormal state occurs in the power supply port, a stable power source voltage may be provided to the central office equipment in time through the energy storage module. The central office equipment provided by the embodiment of the present disclosure solves the problem in the existing reverse power supply system that, when the multi-port power supply mode is switched to the single-port power supply mode, the output voltage is cut off due to overcurrent or overload of the single-port PSE so that the central office equipment is rebooted due to insufficient power supply, which thereby causes the single-port PSE unable to carry out normal business.

Since a PSE in the existing reverse power supply system have the possibility of being frequently powered on and off and being frequently plugged and unplugged copper wires, it may cause a situation where the central office equipment is frequently booted up when the multi-port power supply mode is switched to the single-port power supply mode. According to the central office equipment provided by the embodiment of the present disclosure, the problem that the central office equipment is rebooted due to insufficient power supply is solved, and the problem that the central office equipment is frequently booted up can be solved.

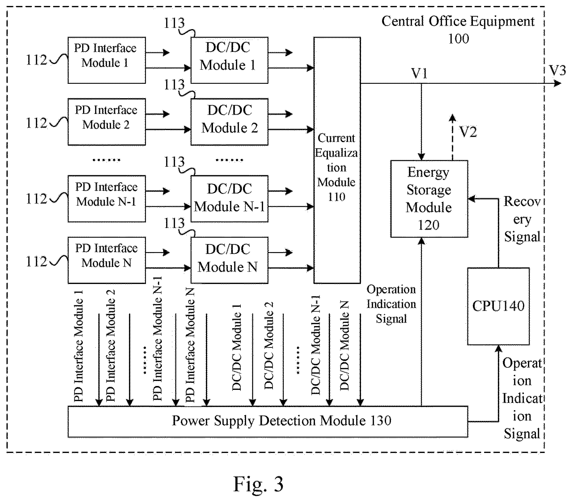

Fig. 3 is a structural schematic diagram of another central office equipment provided by an embodiment of the present disclosure. Based on the above embodiment, the central office equipment in the embodiment of the present disclosure may further include a Central Processing Unit (CPU for short) 140 respectively connected to the energy storage module 120 and the power supply detection module 130.

In this embodiment, the power supply detection module 130 is further configured to output an operation indication signal to the CPU 140 when it is monitored that the central office equipment 100 is in a single-port power supply state or a power-down state.

The CPU 140 is configured to perform a power consumption reduction processing onto the central office equipment according to the operation indication signal, and to output a recovery signal to the energy storage module 120 after the power consumption reduction processing is completed.

The energy storage module 120 is configured to control the output voltage V2 of the energy storage module 120 according to the recovery signal to prohibit power supply to the central office equipment 100.

In an embodiment of the present disclosure, the power supply detection module, besides, notifies the energy storage module that an abnormal state occurs in the power supply port of the central office equipment, it may also notify the CPU of the abnormal state so that the CPU can make a corresponding processing. For example, when the central office equipment is in a single-port power supply state, the operation indication signal is used for informing the CPU to carry out a power consumption reduction processing, so as to control the central office equipment to shut down those working modules corresponding to that power supply port of the abnormal state. In the process of performing a power consumption reduction processing by the CPU, the output voltage of the energy storage module participates all along in supplying power to the central office equipment, so as to avoid the phenomenon that in the single-port power supply mode, a single-port PSE cuts off the output voltage due to overcurrent or overload so that the central office equipment is rebooted due to insufficient power supply. During the operation of the energy storage module, the central office equipment has enough time to reduce the power consumption of the working modules which do not participate in the power supply. After the power consumption reduction task is done, the CPU instructs the energy storage module to restore its output voltage to a level for normal power supply of the central office equipment, that is, the energy storage module no longer supplies power to the central office equipment and the PSE turns to independently supply power to the central office equipment. Because the single-port PSE will no longer has overcurrent or overload condition at this time, that is, the output voltage will not be cut off any longer, the normal operation of the central office equipment can be ensured. For another example, when the central office equipment is in a power-down state, the operation indication signal is used for reporting in advance the Dying Gasp to the central office equipment, and at the same time, the output voltage of the energy storage module is applied to supply power to the central office equipment, rather than that reporting of the Dying Gasp has to wait until the power source voltage of the central office equipment is lower than a certain set value. In this way, the central office equipment can have more time to report the Dying Gasp to the upper level equipment and to save relevant information urgently.

In the above embodiments of the present disclosure, it has been explained that supplying power to the central office equipment through the output voltage of the energy storage module can be implemented in different ways.

Fig. 4 is a structural schematic diagram of yet another central office equipment provided by the embodiment of the present disclosure. Based on the above embodiments, an output voltage of the current equalization module in the embodiment of the present disclosure is connected to a power source voltage V3 of the central office equipment 100 through a first biasing device 150, and the output voltage of the energy storage module is connected to the power source voltage V2 of the central office equipment 100 through a second biasing device 160. The embodiment shown in Fig. 4 is illustrated with an example based on the structure of the central office device 100 shown in Fig. 3.

In an embodiment of the present disclosure, an implementation of the energy storage module 120 controlling the output voltage V2 of the energy storage module 120, according to an operation indication signal, to supply power to the central office equipment 100 may include: performing a boost processing on the output voltage V2 of the energy storage module 120 according to the operation indication signal, so that the second biasing device 160 is turned on and the first biasing device 150 is turned off, As a result, the central office equipment 100 is supplied power through the output voltage V2 of the energy storage module 120.

In an embodiment of the present disclosure, when receiving the operation indication signal, the energy storage module knows that the central office equipment is in a single-port working state or a power-down state. At the moment, the energy storage module may perform a boost processing on its output voltage so that the output voltage of the energy storage module is greater than the output voltage of the PSE after passing through the current equalization module, that is, V2>V1. Then, the second biasing device (e.g., VD2) is turned on and the first biasing device (e.g., VD1) is turned off, and the energy storage module independently supplies power to the central office equipment. The CPU of the central office equipment outputs a recovery signal to the energy storage module after completing the power consumption reduction processing, so that the output voltage V2 of the energy storage module is restored to a voltage value set in a normal working mode. As a result, after the supplied power of the single-port PSE passes through the current equalization module, the output voltage V1 is greater than the output voltage V2 of the energy storage module, and the central office equipment turns to be supplied power through the single-port PSE.

In a practical application, the first biasing device 150 and the second biasing device 160 in the embodiment of the present disclosure may be Schottky diodes, or may be composed of Metal Oxide Semiconductor (MOS for short) transistor rectifier chips. The embodiment shown in Fig. 4 is illustrated by taking an example that the first biasing device 150 and the second biasing device 160 are diodes.

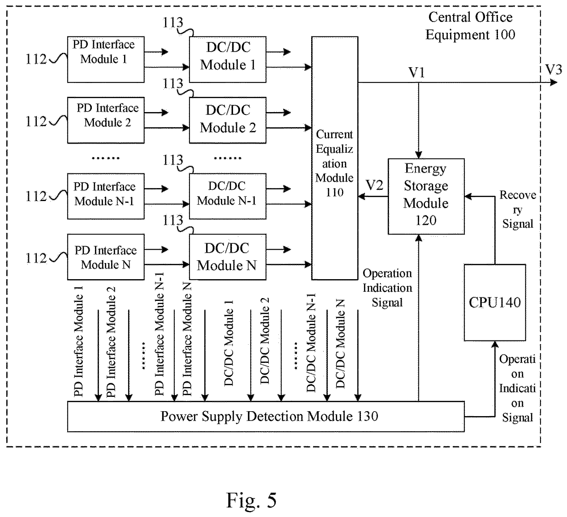

Fig. 5 is structural schematic diagram of still another central office equipment provided by an embodiment of the present disclosure. Based on the above embodiments, the output voltage V1 of the current equalization module 110 in this embodiment of the present disclosure is connected to the power source voltage V3 of the central office equipment 100, and the output voltage V2 of the energy storage module 120 is connected to the input port of the current equalization module 110. The embodiment shown in Fig. 5 is also illustrated by taking an example on the basis of the structure of the central office device shown in Fig. 3.

In an embodiment of the present disclosure, an implementation of the energy storage module 120 controlling the output voltage V2 of the energy storage module 120, according to an operation indication signal, to supply power to the central office equipment 100 may include: controlling the output voltage V2 of the energy storage module 120, according to the operation indication signal, to flow into the current equalization module 110 so that the output voltage V2 of the energy storage module 120 and an output voltage of the PSE for power supply simultaneously supply power to the central office equipment 100.

In an embodiment of the present disclosure, after receiving the operation indication signal, the energy storage module knows that the central office equipment is in a single-port working state or a power-down state. At the moment, the energy storage module may control its output voltage V2 to flow into the current equalization module so that the output voltage V2 of the energy storage module and a power supply voltage from the single-port PSE together pass through the current equalization module, and then the central office equipment is supplied power by the output voltage V1. The CPU of the central office equipment outputs a recovery signal to the energy storage module after completing the power consumption reduction processing, and controls the output voltage V2 of the energy storage module to prohibit its flow into the current equalization module, that is, the output voltage V2 of the energy storage module will no longer participate in current equalization. In this way, a stable operation of the central office equipment can be ensured when the multi-port power supply mode is switched to the single-port power supply mode.

In an embodiment of the present disclosure, a combined signal output by a set of the PD interface module 112 and the DC/DC module 113 connected to the power supply detection module 130 is referred to as a port state signal D. The number of port state signals D to the power supply detection module 130 is identical with the number of the power supply ports. Each port state signal D is formed by output signals of the PD interface module 112 and the DC/DC module 113 connected to a corresponding power supply port.

The operation indication signal in the above embodiment of the present disclosure includes a first operation indication signal and a second operation indication signal. When the first operation indication signal is at a high level, it is indicated that the central office equipment 100 is in a single-port power supply state; and when the second operation indication signal is at a low level, it is indicated that the central office equipment 100 is in a power-down state.

In a practical application of the embodiment of the present disclosure, an implementation of the energy storage module 120 controlling the output voltage V2 of the energy storage module 120, according to an operation indication signal, to supply power to the central office equipment 100 may include: controlling the output voltage V2 of the energy storage module 120 to supply power to the central office equipment when the first operation indication signal is at a high level or the second operation indication signal is at a low level.

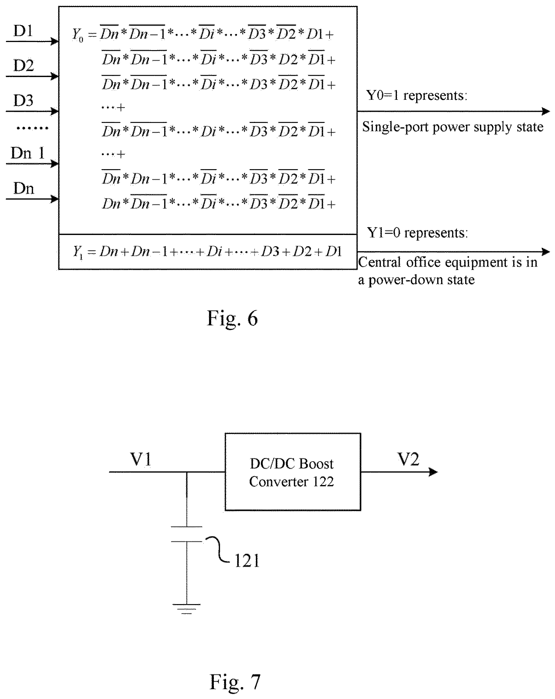

As shown in Fig. 6, it is a logic schematic diagram of the power supply detection module in the central office equipment provided by an embodiment of the present disclosure. In the figure, Dn~D1 are port state signals; Y0 is the first operation indication signal; and Y1 is the second operation indication signal.

In the embodiment, Y0 may be expressed as:

$$
\begin{aligned}
Y_0 = &\overline{Dn} * \overline{Dn-1} * \cdots * \overline{Di} * \cdots * \overline{D3} * \overline{D2} * D1 + \\
&\overline{Dn} * \overline{Dn-1} * \cdots * \overline{Di} * \cdots * \overline{D3} * D2 * \overline{D1} + \\
&\overline{Dn} * \overline{Dn-1} * \cdots * \overline{Di} * \cdots * D3 * \overline{D2} * \overline{D1} + \\
&\cdots + \\
&\overline{Dn} * \overline{Dn-1} * \cdots * Di * \cdots * \overline{D3} * \overline{D2} * \overline{D1} + ; \qquad\qquad (1) \\
&\cdots + \\
&\overline{Dn} * Dn-1 * \cdots * \overline{Di} * \cdots * \overline{D3} * \overline{D2} * \overline{D1} + \\
&Dn * \overline{Dn-1} * \cdots * \overline{Di} * \cdots * \overline{D3} * \overline{D2} * \overline{D1} +
\end{aligned}
$$

Y1 may be expressed as:

$$
Y_1 = Dn + Dn-1 + \cdots + Di + \cdots + D3 + D2 + D1 ; \qquad\qquad (2)
$$

wherein Di represents the port state signal corresponding to the $i^{th}$ power supply port, and $\overline{Di}$ is the reverse of Di.

It can be seen from the logical relationship shown in the above formulas (1) and (2) that working states output by a set of the PD interface module and the DC/DC module are combined to form a port state signal (D1~Dn), a high level of which represents that the power supply port works normally; D1 represents a first port state signal, D2 represents a second port state signal, and so on. Dn being a high level represents that a state signal output by a PSE corresponding to the $n^{th}$ port is normal, and that PD interface module and DC/DC module corresponding to the central office equipment are also in a normal working state. It can be learned from Fig. 6 that when only one power supply port is in a normal working state, an output signal Y0 of the power supply detection module will be changed to a high level, that is, when Y0 is changed from "0" to "1", the CPU of the central office equipment is notified to carry out a power consumption reduction processing, and the energy storage module is notified to control its output voltage to supply power to the central office equipment. When all of the power supply ports are in an abnormal working state, an output signal Y1 of the power supply detection module will be changed to a low level, that is, when Y1 is changed from "1" to "0", the CPU of the central office equipment is notified to report the Dying Gasp to the upper level equipment and save relevant information urgently.

In one implementation of the embodiment of the present disclosure, the energy storage module 120 may include an energy storage capacitor 121 and a DC/DC boost converter 122. As shown in Fig. 7, it is a structural schematic diagram of an energy storage module in the central office equipment provided by an embodiment of the present disclosure. The output voltage V1 of the current equalization module110 is respectively connected to the energy storage capacitor 121 and the DC/DC boost converter 122. The DC/DC boost converter 122 is configured to output the output voltage V2 of the energy storage module 120. The energy storage capacitor 121 is grounded.

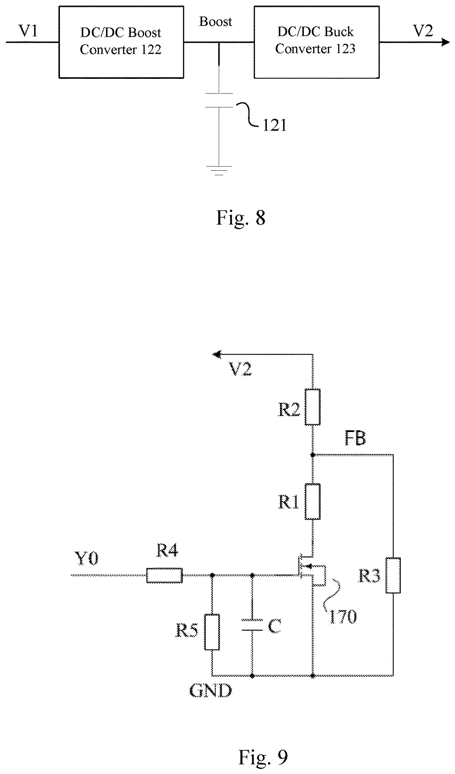

In another implementation of the embodiment of the present disclosure, considering that a quantity of energy of the capacitive energy storage is proportional to the square of the voltage of the energy storage capacitor 121, the energy storage module 120 may include a DC/DC boost converter 122, an energy storage capacitor 121 and a DC/DC buck converter 123. As shown in Fig. 8, it is a structural schematic diagram of another energy storage module in the central office equipment provided by an embodiment of the present disclosure. The output voltage V1 of the current equalization module 110 is connected to the DC/DC boost converter 122, and an output end of the DC/DC boost converter 122 is respectively connected to the energy storage capacitor 121 and the DC/DC buck converter 123. The DC/DC buck converter 123 is configured to output the output voltage V2 of the energy storage module 120. The energy storage capacitor 121 is grounded. This structure of the energy storage module 120 can enable the energy storage capacitor 121 to obtain and provide more energy so as to prolong the working time of the energy storage module 120.

The embodiments of the present disclosure do not limit the structure of the energy storage module to be only of that shown in Fig. 7 and Fig. 8. Various configurations can be used as the energy storage module in the embodiments of the present disclosure as long as structure thereof can realize a boost processing on the output voltage V2 of the energy storage module such that the output voltage of the energy storage module is able to supply power to the central office equipment.

Fig. 9 is a structural schematic diagram of a DC/DC buck converter in the central office equipment provided by an embodiment of the present disclosure. The DC/DC buck converter 123 in the embodiment of the present disclosure may include: a third biasing device 170, a first resistor R1 and a second resistor R2 which are sequentially connected with an output end of the power supply detection module 130, and a third resistor R3 connected in parallel with the third biasing device 170 and the first resistor R1, one end of the third biasing device and one end of the third resistor R3 being grounded. In this embodiment, the third biasing device 170 may be a MOS transistor or other triodes. The third biasing device 170 in the DC/DC buck converter 123 is configured to turn on and off the first resistor R1. When the third biasing device 170 is turned on, a voltage FB generated under voltage division between a parallel of first resistor R1 with the third resistor R3 and the second resistor R2 is used as a feedback control voltage of the DC/DC buck converter 123. When the third biasing device 170 is turned off, a voltage FB generated under voltage division between the third resistor R3 and the second resistor R2 is used as a feedback control voltage of the DC/DC buck converter 123. In addition, the DC/DC buck converter 123 may further include a conventional circuit, such as a fourth resistor R4 connected between an output end of the power supply detection module and the third biasing device 170, and a fifth resistor R5 and a capacitor C connected in parallel, the fifth resistor R5 and one end of the capacitor C being grounded. The conventional circuit is used for filtering burrs in the circuit.

The DC/DC buck converter in the embodiment of the present disclosure is configured to turn off the third biasing device when the first operation indication signal is at a low level (Y0=0), and at this time, a bleeder voltage of the third resistor R3 under voltage division with the second resistor R2 is used as the feedback control voltage FB of the DC/DC buck converter. In addition, the DC/DC buck converter is further configured to turn on the third biasing device when the first operation indication signal is at a high level (Y0=1), and at this time, a bleeder voltage of the parallel connected first resistor R1 and the third resistor R3 under voltage division with the second resistor R2 is used as the feedback control voltage FB of the DC/DC buck converter. Resistance value on basis of R1 and R3 connected in parallel is smaller than R3, and thus the output voltage V2 of the energy storage module rises up. After the central office equipment performs a power consumption reduction processing, the third biasing device is turned off by controlling Y0 to be at a low level, and the output voltage V2 of the energy storage module is restored to the normal working state. For the energy storage module in the embodiment of the present disclosure, since a response time of boost switching is very short, the output voltage of the energy storage module has already started to supply power to the central office equipment when the single-port PSE does not yet generate an overcurrent or an overload. In this way, the central office equipment can be ensured to work stably when the multi-port power supply mode is switched to the single-port power supply mode.

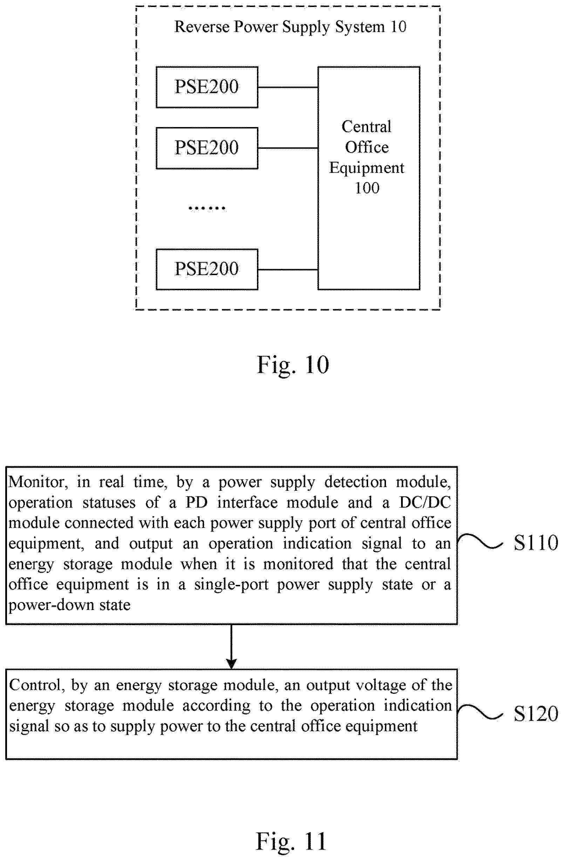

Fig. 10 is a structural schematic diagram of a reverse power supply system provided by an embodiment of the present disclosure. The reverse power supply system provided by the embodiment of the present disclosure is applied to the situation where the central office equipment obtains the power source voltage by reverse power supply. The reverse power supply system is realized through hardware in combination with software. As shown in Fig. 10, the reverse power supply system 10 provided by the embodiment of the present disclosure may include: a central office equipment 100, and at least one piece of PSE 200 connected to the central office equipment 100.

In the embodiment, the central office equipment 100 in the embodiment of the present disclosure may be the central office equipment 100 in any of the embodiments as shown in Figs. 2 to 9, and it has the same hardware structure and module function as the central office equipment 100 in those above embodiments and is used for performing the same reverse power supply mode.

Each of the PSEs 200 in Fig. 10 is configured to supply power to the central office equipment 100 in terms of a power allocated by the current equalization module 110 of the central office equipment 100.

Fig. 11 is a flowchart of a reverse power supply method provided by an embodiment of the present disclosure. The reverse power supply method provided by this embodiment is applied to the situation where the central office equipment obtains the power source voltage by reverse power supply in a reverse power supply system. The reverse power supply method may be performed by central office equipment, and the central office equipment is realized through hardware in combination with software. As shown in Fig. 11, the reverse power supply method of this embodiment may include the following steps.

At S110, a power supply detection module monitors, in real time, operation statuses of a PD interface module and a DC/DC module connected with each power supply port of a central office equipment, and outputs an operation indication signal to a energy storage module when it is monitored that the central office equipment is in a single-port power supply state or a power-down state.

The reverse power supply method provided in the embodiment of the present disclosure is embodied in such a way that a central office equipment in the reverse power supply system is provided the power source voltage through the PSEs which are connected with it and in a working state. The central office equipment is provided with a plurality of power supply ports, each corresponding to one piece of PSE. The structure of the central office equipment for performing the reverse power supply method in the embodiment of the present disclosure may refer to the central office equipment in the embodiment as shown in Fig. 2. Coupling approach and implementation functions of respective modules in the central office equipment have been described in detail in the above embodiments, and thus are no longer detailed here.

In an embodiment of the present disclosure, since each power supply port of the central office equipment corresponds to a set of a PD interface module and a DC/DC module, the power supply detection module may monitor the operation status of the PD interface module and the DC/DC module corresponding to each power supply port. As long as the operation status of either of the PD interface module and the DC/DC module is monitored to be in an abnormal state, the power supply port corresponding to the abnormal state is determined to be abnormal. In a multi-port power supply mode, if only one power supply port was in normal power supply in a moment, or if all power supply ports did not supply power any longer (that is, the central office equipment is in a power-down state), then at this time, the power supply detection module outputs an operation indication signal to the energy storage module so as to control the energy storage module and notify a CPU of the central office equipment to perform a corresponding processing, thereby avoiding the problem that the central office equipment is rebooted due to the overcurrent or overload of a single-port PSE.

At S120, the energy storage module controls an output voltage of the energy storage module, according to the operation indication signal, to supply power to the central office equipment.

In an embodiment of the present disclosure, when receiving the operation indication signal output by the power supply detection module, the energy storage module knows that the power supply port of the central office equipment is in an abnormal state, for example, the central office equipment being in a single-port power supply state or a power-down state. At the moment, a corresponding processing needs to be carried out to the power supply mode of the central office equipment, that is, the central office equipment may turn to be supplied through an output voltage of the energy storage module.

The embodiment of the present disclosure does not limit the implementation mode of supplying power to the central office equipment through the output voltage of the energy storage module. For example, the output voltage of the energy storage module may be used independently to supply power to the central office equipment; for another example, the output voltage of the energy storage module and the output voltage of the single-port PSE may be used simultaneously in terms of a certain ratio to supply power to the central office equipment. According to the standard relevant to POE, at the moment, the single-port PSE only needs to maintain a certain amount of small current to avoid entering an idle state.

In the existing reverse power supply system, when the multi-port power supply mode is switched to the single-port power supply mode, the energy storage module of the central office equipment cannot sense that the central office equipment is in a single-port power supply mode. At this time, majority of the power supply ports have been powered down, but V1 is not powered down yet due to the delay. Only when V1 is powered down, can it be known that some power supply ports have been powered down. As a result, when the single-port PSE cuts off the output voltage due to overcurrent or overload, the central office equipment will be rebooted due to insufficient power supply so that the single-port PSE cannot carry out the normal business. In contrast, in the reverse power supply method provided by the embodiment of the present disclosure, once an abnormal power supply state of a power supply port is monitored, the power supply detection module immediately sends a prompt signal (i.e., an operation indication signal) to the energy storage module. In this way, when an abnormal state occurs, the energy storage module can be timely notified that an abnormal state occurs in the power supply port, which is beneficial to the corresponding processing of the energy storage module to ensure the stable power supply of the central office equipment.

The reverse power supply method provided by the embodiment of the present disclosure is a processing method of the central office equipment provided by the embodiment shown in Fig. 2 of the present disclosure, and it has corresponding the method steps. Since implementation principles and technical effects are similar therebetween, details thus are not described here any longer.

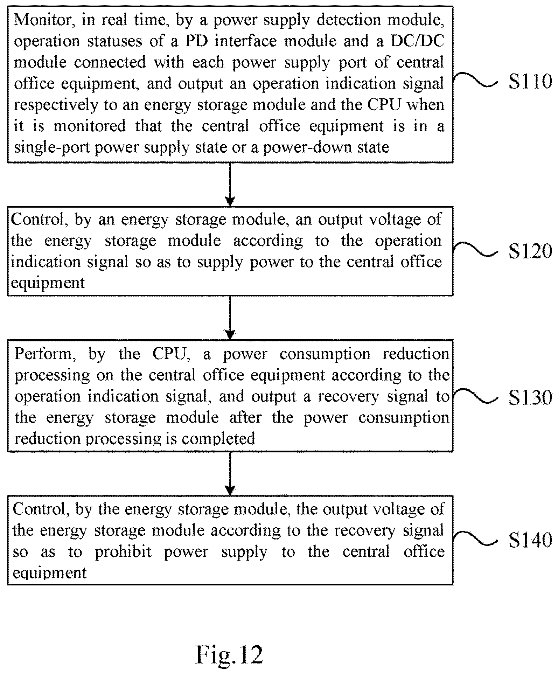

Fig. 12 is a flowchart of another reverse power supply method provided by an embodiment of the present disclosure. On the basis of the above embodiments, in the reverse power supply method provided by this embodiment of the present disclosure, an implementation of S110 may be:

at S110, the power supply detection module monitors, in real time, operation statuses of a PD interface module and a DC/DC module connected with each power supply port of central office equipment, and outputs an operation indication signal to an energy storage module and the CPU when it is monitored that the central office equipment is in a single-port power supply state or a power-down state.

The method provided by the embodiment of the present disclosure may further include:

at S130, the CPU performs a power consumption reduction processing on the central office equipment according to the operation indication signal, and outputs a recovery signal to the energy storage module after the power consumption reduction processing is completed;

at S140, the energy storage module controls the output voltage of the energy storage module, according to the recovery signal, to prohibit power supply to the central office equipment.

The structure of the central office equipment for performing the reverse power supply method in the embodiment of the present disclosure may refer to the central office equipment in the embodiment as shown in Fig. 3. Since connection approach and implementation functions of respective modules in the central office equipment have been described in detail in the above embodiments, details thus are not described here any longer.

In an embodiment of the present disclosure, the power supply detection module, besides, notifies the energy storage module that an abnormal state occurs in the power supply port of the central office equipment, it may also notify the CPU of the abnormal state so that the CPU can make a corresponding processing. For example, when the central office equipment is in a single-port power supply state, the operation indication signal is used for informing the CPU to carry out a power consumption reduction processing, so as to control the central office equipment to shut down those working modules corresponding to that power supply port of the abnormal state. In the process of performing a power consumption reduction processing by the CPU, the output voltage of the energy storage module participates all along in supplying power to the central office equipment, so as to avoid the phenomenon that in the single-port power supply mode, the single-port PSE turns off the output voltage due to overcurrent or overload, so that the central office equipment is rebooted due to insufficient power supply. During the operation of the energy storage module, the central office equipment has enough time to reduce the power consumption of the working modules which do not participate in the power supply. After the power consumption reduction task is completed, the CPU instructs the energy storage module to restore its output voltage to a level for normal power supply of the central office equipment, that is, the energy storage module no longer supplies power to the central office equipment and the PSE turns to independently supply power to the central office equipment. Because the single-port PSE will no longer have overcurrent or overload condition at this time, that is, the output voltage will not be cut off any longer, the normal operation of the central office equipment can be ensured. For another example, when the central office equipment is in a power-down state, the operation indication signal is used for reporting in advance a Dying Gasp to the central office equipment, and at the same time, the output voltage of the energy storage module is applied to supply power to the central office equipment, rather than that reporting of the Dying Gasp has to wait until the power source voltage of the central office equipment is lower than a certain set value. In this way, the central office equipment can have more time to report the Dying Gasp to the upper level equipment and to save relevant information urgently.

The reverse power supply method provided by the embodiment of the present disclosure is a processing method of the central office equipment provided by the embodiment shown in Fig. 3 of the present disclosure, and it has the corresponding method steps. Since implementation principles and technical effects are similar therebetween, details thus are not described here any longer.

In the above embodiments of the present disclosure, it has been explained that supplying power to the central office equipment through the output voltage of the energy storage module can be implemented in different ways.

In an embodiment of the present disclosure, an implementation of the energy storage module controlling an output voltage of the energy storage module, according to an operation indication signal, to supply power to the central office equipment, i.e., an implementation of S120 may include: performing, by the energy storage module, a boost processing on the output voltage of the energy storage module according to the operation indication signal, so that the central office equipment is supplied power through the output voltage of the energy storage module. The structure of the central office equipment for performing the reverse power supply method in the embodiment of the present disclosure may refer to the central office equipment in the embodiment as shown in Fig. 4.

In an embodiment of the present disclosure, after receiving the operation indication signal, the energy storage module knows that the central office equipment is in a single-port working state or a power-down state. At the moment, the energy storage module may perform a boost processing on its output voltage so that the output voltage of the energy storage module is greater than the output voltage of the PSE after passing through the current equalization module, that is, V2>V1. Then, the second biasing device (VD2) is turned on and the first biasing device (VD1) is turned off, and the energy storage module independently supplies power to the central office equipment. The CPU of the central office equipment outputs a recovery signal to the energy storage module after completing the power consumption reduction processing, so that the output voltage V2 of the energy storage module is restored to a voltage value set in a normal working mode. As a result, after the supplied power of the single-port PSE passes through the current equalization module, the output voltage V1 is greater than the output voltage V2 of the energy storage module, and the central office equipment turns to be supplied power through the single-port PSE.

In a practical application, VD1 and VD2 in this embodiment of the present disclosure may be Schottky diodes, and may also be composed of MOS transistor rectifier chips.

The reverse power supply method provided by the embodiment of the present disclosure is a processing method of the central office equipment provided by the embodiment shown in Fig. 4 of the present disclosure, and it has the corresponding method steps. Since implementation principles and technical effects are similar therebetween, details thus are not described here any longer.

In an embodiment of the present disclosure, an implementation of the energy storage module controlling an output voltage of the energy storage module, according to an operation indication signal, to supply power to the central office equipment, i.e., an implementation mode of S120 may include: controlling, by the energy storage module, the output voltage of the energy storage module, according to the operation indication signal, to flow into the current equalization module so that the output voltage of the energy storage module and an output voltage of the PSE for power supply simultaneously supply power to the central office equipment. The structure of the central office equipment for performing the reverse power supply method in this embodiment of the present disclosure may refer to the central office equipment in the embodiment as shown in Fig. 5.

In an embodiment of the present disclosure, after receiving the operation indication signal, the energy storage module knows that the central office equipment is in a single-port working state or a power-down state. At the moment, the energy storage module may control its output voltage V2 to flow into the current equalization module so that the output voltage V2 of the energy storage module and a power supply voltage from the single-port PSE together pass through the current equalization module, and then the central office equipment is supplied power by the output voltage V1. The CPU of the central office equipment outputs a recovery signal to the energy storage module after completing the power consumption reduction processing, and controls the output voltage V2 of the energy storage module to prohibit its flow into the current equalization module, that is, the output voltage V2 of the energy storage module will no longer participate in current equalization. In this way, a stable operation of the central office equipment can be ensured when the multi-port power supply mode is switched to the single-port power supply mode.

The reverse power supply method provided by the embodiment of the present disclosure is a processing method of the central office equipment provided by the embodiment shown in Fig. 5 of the present disclosure, and it has the corresponding method steps. Since implementation principles and technical effects are similar therebetween, details thus are not described here any longer.

In an embodiment of the present disclosure, a combined signal output by a set of the PD interface module and DC/DC module connected to the power supply detection module is referred to as a port state signal. The number of port state signals to the power supply detection module is identical with the number of the power supply ports. Each port state signal is formed by output signals of the PD interface module and the DC/DC module connected to a corresponding power supply port.

The operation indication signal in the above embodiment of the present disclosure includes a first operation indication signal and a second operation indication signal. When the first operation indication signal is at a high level, it is indicated that the central office equipment is in a single-port power supply state; when the second operation indication signal is at a low level, it is indicated that the central office equipment is in a power-down state.

In a practical application of the embodiment of the present disclosure, an implementation of the energy storage module controlling an output voltage of the energy storage module, according to an operation indication signal, so as to supply power to the central office equipment may include: controlling the output voltage of the energy storage module to supply power to the central office equipment when the first operation indication signal is at a high level or the second operation indication signal is at a low level.

The method provided by the embodiment of the present disclosure may refer to the logic schematic diagram as shown in Fig. 6, wherein Dn~D1 are port state signals; Y0 is the first operation indication signal; and Y1 is the second operation indication signal.

In the embodiment, Y0 may be expressed as:

$$Y_0 = \overline{Dn}*\overline{Dn-1}*\cdots*\overline{Di}*\cdots*\overline{D3}*\overline{D2}*D1+$$
$$\overline{Dn}*\overline{Dn-1}*\cdots*\overline{Di}*\cdots*\overline{D3}*D2*\overline{D1}+$$
$$\overline{Dn}*\overline{Dn-1}*\cdots*\overline{Di}*\cdots*D3*\overline{D2}*\overline{D1}+$$
$$\cdots+$$
$$\overline{Dn}*\overline{Dn-1}*\cdots*Di*\cdots*\overline{D3}*\overline{D2}*\overline{D1}+;\qquad(1)$$
$$\cdots+$$
$$\overline{Dn}*Dn-1*\cdots*\overline{Di}*\cdots*\overline{D3}*\overline{D2}*\overline{D1}+$$
$$Dn*\overline{Dn-1}*\cdots*\overline{Di}*\cdots*\overline{D3}*\overline{D2}*\overline{D1}+$$

Y1 may be expressed as:

$$Y_1 = Dn + Dn-1 + \cdots + Di + \cdots + D3 + D2 + D1;\qquad(2)$$

wherein, Di represents the port state signal corresponding to the $i^{th}$ power supply port, and $\overline{Di}$ is the reverse of Di.

It can be seen from the logical relationship shown in the above formulas (1) and (2) that working states output by a set of the PD interface module and the DC/DC module are combined to form a port state signal (D1~Dn), a high level of which represents that the power supply port works normally; D1 represents a first port state signal, D2 represents a second port state signal, and so on. Dn being a high level represents that a state signal output by a PSE corresponding to the $n^{th}$ port is normal, and that PD interface module and DC/DC module corresponding to the central office equipment are also in a normal working state. It can be learned from Fig. 6 that when only one power supply port is in a normal working state, an output signal Y0 of the power supply detection module will be changed to a high level, that is, when Y0 is changed from "0" to "1", the CPU of the central office equipment is notified to carry out a power consumption reduction processing, and the energy storage module is notified to control its output voltage to supply power to the central office equipment. When all of the power supply ports are in an abnormal working state, an output signal Y1 of the power supply detection module will be changed to a low level, that is, when Y1 is changed from "1" to "0", the CPU of the central office equipment is notified to report the Dying Gasp to the upper level equipment and save relevant information urgently.

In the central office equipment for performing the reverse power supply method in the embodiment of the present disclosure, the structure of the energy storage module may refer to the structure shown in Fig. 7 and Fig. 8, and the structure of the DC/DC buck converter in the energy storage module may refer to the structure shown in Fig. 9, which are not described in detail here any longer. In addition, the embodiments of the present disclosure also do not limit the structure of the energy storage module to be only that of Fig. 7 and Fig. 8. Various configurations can be used as the energy storage module in the embodiments of the present disclosure as long as structure thereof can realize a boost processing on the output voltage V2 of the energy storage module such that the output voltage of the energy storage module is able to supply power to the central office equipment.

An embodiment of the present disclosure further provides a computer readable storage medium, storing computer executable instructions which, when are executed by a processor, cause the following operations to be performed:

at S1, a power supply detection module monitors, in real time, operation statuses of a central office Powered Device PD interface module and a Direct-Current to Direct-Current DC/DC module connected to each power supply port of the central office equipment, and outputs an operation indication signal to the energy storage module when it is monitored that the central office equipment is in a single-port power supply state or a power-down state; and

at S2, an energy storage module controls, an output voltage of the energy storage module, according to the operation indication signal, to supply power to the central office equipment.

In an embodiment of the present disclosure, when the processor executes the computer executable instructions, the following operations may also be performed:

at S3, the power supply detection module outputs, an operation indication signal to the processor CPU when it is monitored that the central office equipment is in a single-port power supply state or a power-down state;

at S4, the CPU performs a power consumption reduction processing on the central office equipment according to the operation indication signal, and outputs a recovery signal to the energy storage module after the power consumption reduction processing is completed; and

at S5, the energy storage module controls the output voltage of the energy storage module, according to the recovery signal, to prohibit power supply to the central office equipment.

In one implementation of the embodiment of the present disclosure, when the processor executes the computer executable instructions, performing an implementation of S2 may include:

at S21, the energy storage module performs a boost processing on the output voltage of the energy storage module according to the operation indication signal so as to supply power to the central office equipment through the output voltage of the energy storage module.

In another implementation of the embodiment of the present disclosure, when the processor executes the computer executable instructions, performing an implementation of S2 may include:

at S22, the energy storage module controls the output voltage of the energy storage module, according to the operation indication signal, to flow into the current equalization module so that the output voltage of the energy storage module and an output voltage of a PSE for power supply simultaneously supply power to the central office equipment.

In an embodiment of the present disclosure, the number of the port state signals of the power supply detection module may be the same as the number of the power supply ports, and each of the port state signals may be formed by output signals of a PD interface module and a DC/DC module connected to a corresponding power supply port. The operation indication signal may include a first operation indication signal and a second operation indication signal. When the first operation indication signal is at a high level, it is indicated that the central office equipment is in a single-port power supply state; and when the second operation indication signal is at a low level, it is indicated that the central office equipment is in a power-down state.

When the processor in the embodiment of the present disclosure executes the computer executable instructions, performing an implementation of S2 may include:

at S23, the energy storage module controls the output voltage of the energy storage module to supply power to the central office equipment when the first operation indication signal is at a high level or the second operation indication signal is at a low level.

In the central office equipment, and the reverse power supply system and method provided by the embodiments of the present disclosure, working states of each PD interface module and each DC/DC module may be monitored in real time by providing in the central office equipment a power supply detection module which is respectively connected to the energy storage module, each of the PD interface modules and each of the DC/DC modules. When it is monitored that the central office equipment is in a single-port power supply state or a power-down state, an operation indication signal is output to the energy storage module so as to control an output voltage of the energy storage module to supply power to the central office equipment. In this way, it can be ensured that when an abnormal state occurs in the power supply port, a stable power source voltage may be provided to the central office equipment in time through the energy storage module. The central office equipment provided by the embodiments of the present disclosure solves the problem that in the existing reverse power supply system, when the multi-port power supply mode is switched to the single-port power supply mode, an output voltage of the single-port PSE is turned off due to overcurrent or overload so that the central office equipment is rebooted due to insufficient power supply, thereby causing the single-port PSE unable to carry out normal business.

Those of ordinary skill in the art may understand that the functional modules/units in all or some of the steps, systems, and devices in the method disclosed above can be implemented as software, firmware, hardware and an appropriate combination thereof. In the hardware implementation, the division between functional modules/units mentioned in the above description does not necessarily correspond to the division of physical components; for example, one physical component may have multiple functions, or one function or step may be executed by several physical components in cooperation. Some or all of the components may be implemented as software executed by a processor, such as a digital signal processor or a microprocessor, or may be implemented as hardware, or may be implemented as an integrated circuit, such as a dedicated integrated circuit. Such software may be distributed on computer readable media, and the computer readable media may include computer storage media (or non-transitory media) and communication media (or transitory media). As is well known to those of ordinary skill in the art, the term computer storage medium includes volatile and nonvolatile, removable and non-removable media implemented in any method or technology for storing information (such as computer readable instructions, data structures, program modules, or other data). The computer storage medium includes, but is not limited to, an RAM, an ROM, an EEPROM, a flash memory or other memory technology, a CD-ROM, a Digital Versatile Disc (DVD) or other optical disc storage, magnetic cartridge, magnetic tape, magnetic disk storage or other magnetic storage device, or any other medium which can be used to store desired information and can be accessed by a computer. Moreover, it is well known to those of ordinary skill in the art that communication media usually include computer readable instructions, data structures, program modules, or other data in a modulated data signal such as carrier or other transmission mechanisms, and may include any information delivery media.

Although the embodiments disclosed in the present disclosure are as above, the described contents are only the embodiments used to facilitate the understanding of the present disclosure and are not intended to limit the present disclosure. Any modification and change in the form and details of the implementation may be made by a person of ordinary skill without departing from the protection scope of the present disclosure as defined in the attached claims, and the patent protection scope of the present disclosure shall still be subject to the scope as defined in the attached claims.

**Claims**

1. A central office equipment (100), comprising: a current equalization module (110), an energy storage module (120) and a power supply detection module (130), the current equalization module (110) being provided with a plurality of power supply ports, and a central office Powered Device, PD, interface module (112) and a Direct-Current to Direct-Current, DC/DC, module (113) being sequentially connected between a user terminal Power Sourcing Equipment, PSE, and each of the plurality of power supply port respectively,

   wherein the current equalization module (110) is configured to evenly distribute a source power, from each of PSEs which are configured for reverse power supply, required by and to the central office equipment (100);
   the power supply detection module (130) is connected to the energy storage module (120), each of PD interface modules (112) and each of DC/DC modules (113), respectively; and the power supply detection module (130) is configured to monitor, in real time, operation statuses of each of the PD interface modules (112) and each of the DC/DC modules (113), and output an operation indication signal to the energy storage module (120) when it is monitored that the central office equipment (100) is in a single-port power supply state or a power-down state, the operation indication signal comprises a first operation indication signal when it is monitored that the central office equipment is in a single-port power supply state and a second operation indication signal when it is monitored that the central office equipment is in a power-down state; and
   the energy storage module (120) is configured to control an output voltage of the energy storage module (120), according to the first operation indication signal or the second operation indication signal, to supply power to the central office equipment (100) so as to prevent the central office equipment (100) from rebooting,
   wherein the central office equipment (100) further comprises: a Central Processing Unit CPU (140) respectively connected to the energy storage module (120) and the power supply detection module (130),
   **characterized in that**, the power supply detection module (130) is further configured to output the first operation indication signal to the CPU (140) when it is monitored that the central office equipment (100) is in the single-port power supply state and the second operation indication signal to the CPU (140) when it is monitored that the central office equipment (100) is in the power-down state;
   the CPU (140) is configured to perform a power consumption reduction processing on the central office equipment (100) according to the first operation indication signal, and output a recovery signal to the energy storage module (120) after the power consumption reduction processing is completed; and the energy storage module (120) is configured to control the output voltage of the energy storage module (120), according to the recovery signal, to prohibit power supply to the central office equipment (100);
   the energy storage module (120) is further configured to output voltage to the central office equipment (100), and the CPU (140) is configured to report a Dying Gasp to an upper level equipment and to save relevant information urgently, according to the second operation indication signal.

2. The central office equipment (100) according to claim 1, **characterized in that**, an output voltage of the current equalization module (110) is connected to a power source voltage of the central office equipment (100) through a first biasing device (150), and the output voltage of the energy storage module (120) is connected to the power source voltage of the central office equipment (100) through a second biasing device (160);
   wherein the energy storage module (120) controls the output voltage of the energy storage module (120), according to the operation indication signal, to supply power to the central office equipment (100), comprising:
   performing a boost processing on the output voltage of the energy storage module (120) according to the operation indication signal so that the second biasing device (160) is turned on and the first biasing device (150) is turned off, by means of which the central office equipment (100) is supplied power through the output voltage of the energy storage module (120).

3. The central office equipment (100) according to claim 1, **characterized in that**, an output voltage of the current equalization module (110) is connected to a power source voltage of the central office equipment (100), and the output voltage of the energy storage module (120) is connected to an input port of the current equalization module (110);
   wherein the energy storage module (120) controls the output voltage of the energy storage module (120), according to the operation indication signal, to supply power to the central office equipment (100), comprising:
   controlling the output voltage of the energy storage module (120), according to the operation indication signal, to flow into the current equalization module (110) so that the output voltage of the energy storage module (120) and an output voltage of a PSE for power supply simultaneously supply power to the central office equipment (100).

4. The central office equipment (100) according to claim 1, **characterized in that**, the number of port state signals of the power supply detection module (130) is identical with the number of the power supply ports, and each of the port state signals is formed by output signals of the PD interface module (112) and the DC/DC module (113) that are connected to a corresponding power supply port; and
when the first operation indication signal is at a high level, it is indicated that the central office equipment (100) is in the single-port power supply state; when the second operation indication signal is at a low level, it is indicated that the central office equipment (100) is in the power-down state.

5. The central office equipment (100) according to claim 4, **characterized in that**, the energy storage module (120) controls the output voltage of the energy storage module (120), according to the operation indication signal, to supply power to the central office equipment (100), comprising:
controlling the output voltage of the energy storage module (120) to supply power to the central office equipment (100) when the first operation indication signal is at a high level or the second operation indication signal is at a low level.

6. The central office equipment (100) according to claim 4, **characterized in that**, the first operation indication signal is expressed as:

$$
\begin{aligned}
Y_0 = {} & \overline{Dn} * \overline{Dn-1} * \cdots * \overline{Di} * \cdots * \overline{D3} * \overline{D2} * D1 + \\
& \overline{Dn} * \overline{Dn-1} * \cdots * \overline{Di} * \cdots * \overline{D3} * D2 * \overline{D1} + \\
& \overline{Dn} * \overline{Dn-1} * \cdots * \overline{Di} * \cdots * D3 * \overline{D2} * \overline{D1} + \\
& \cdots + \\
& \overline{Dn} * \overline{Dn-1} * \cdots * Di * \cdots * \overline{D3} * \overline{D2} * \overline{D1} + ; \\
& \cdots + \\
& \overline{Dn} * Dn-1 * \cdots * \overline{Di} * \cdots * \overline{D3} * \overline{D2} * \overline{D1} + \\
& Dn * \overline{Dn-1} * \cdots * \overline{Di} * \cdots * \overline{D3} * \overline{D2} * \overline{D1} +
\end{aligned}
$$

and the second operation indication signal is expressed as:

$$
Y_1 = Dn + Dn-1 + \cdots + Di + \cdots + D3 + D2 + D1 ;
$$

where Di represents the port state signal corresponding to the i$^{th}$ power supply port, and $\overline{Di}$ is the reverse of Di.

7. The central office equipment (100) according to claim 4, **characterized in that**, the energy storage module (120) comprises:

an energy storage capacitor and a DC/DC boost converter (122) respectively connected with an output voltage of the current equalization module (110), the DC/DC boost converter (122) being configured to output the output voltage of the energy storage module (120); or
a DC/DC boost converter (122) connected with an output voltage of the current equalization module (110), and an energy storage capacitor and a DC/DC buck converter (123) respectively connected with the DC/DC boost converter (122), the DC/DC buck converter (123) being configured to output the output voltage of the energy storage module (120).

8. The central office equipment (100) according to claim 7, **characterized in that**, the DC/DC buck converter (123) comprises:

a third biasing device (170), a first resistor (R1) and a second resistor (R2) which are sequentially connected with an output end of the power supply detection module (130), and a third resistor (R3) connected in parallel with the third biasing device (170) and the first resistor (R1), one end of the third biasing device (170) and one end of the third resistor (R3) being grounded;

the DC/DC buck converter (123) is configured to turn off the third biasing device (170) when the first operation indication signal is at a low level; and

the DC/DC buck converter (123) is further configured to turn on the third biasing device (170) when the first operation indication signal is at a high level.

9. A reverse power supply system (10), comprising: a central office equipment (100), and at least one user terminal Power Sourcing Equipment, PSE, (200) connected to the central office equipment (100);

wherein the central office equipment (100) is the central office equipment according to any one of claims 1-8; and each of PSEs (200) is configured to supply power to the central office equipment (100) in terms of a power allocated by the current equalization module of the central office equipment (100).

10. A reverse power supply method, comprising:

monitoring, in real time, by a power supply detection module (130), operation statuses of a central office Powered Device, PD, interface module (112) and a Direct-Current to Direct-Current, DC/DC, module (113) connected with each of a plurality of power supply ports of a central office equipment (100), and outputting an operation indication signal to an energy storage module (120) when it is monitored that the central office equipment is in a single-port power supply state or a power-down state (S110), wherein the operation indication signal comprises a first operation indication signal when it is monitored that the central office equipment is in a single-port power supply state and a second operation indication signal when it is monitored that the central office equipment is in a power-down state; and

controlling, by the energy storage module (120), an output voltage of the energy storage module according to the first operation indication signal or the second operation indication signal to supply power to the central office equipment (S120) so as to prevent the central office equipment (100) from rebooting,

wherein the central office equipment (100) comprises a current equalization module (110), the energy storage module (120), the power supply detection module (130) and a Central Processing Unit CPU (140) respectively connected to the energy storage module (120) and the power supply detection module (130), and wherein the current equalization module (110) is provided with the plurality of power supply ports, and a central office PD interface module (112) and a DC/DC module (113) are sequentially connected between a user terminal Power Sourcing Equipment, PSE, and each of the plurality of power supply ports respectively,

**characterized in that**, the reverse power supply method further comprises:

outputting, by the power supply detection module, the first operation indication signal to the Central Processing Unit CPU when it is monitored that the central office equipment is in the single-port power supply state or the second operation indication signal to the CPU when it is monitored that the central office equipment is in the power-down state;

performing, by the CPU, a power consumption reduction processing on the central office equipment according to the first operation indication signal, and outputting a recovery signal to the energy storage module after the power consumption reduction processing is completed (S130);

controlling, by the energy storage module, the output voltage of the energy storage module according to the recovery signal to prohibit power supply to the central office equipment (S140),

wherein the reverse power supply method further comprises:

outputting, by the energy storage module (120), voltage to the central office equipment (100), and reporting a Dying Gasp to an upper level equipment and saving relevant information urgently, by the CPU (140), according to the second operation indication signal.

11. The reverse power supply method according to claim 10, **characterized in that**, controlling, by the energy storage module, the output voltage of the energy storage module according to the operation indication signal to supply power to the central office equipment (S120), comprising:

performing, by the energy storage module, a boost processing on the output voltage of the energy storage module according to the operation indication signal to supply power to the central office equipment through the output voltage of the energy storage module; or

controlling, by the energy storage module, the output voltage of the energy storage module according to the operation indication signal to flow into the current equalization module so that the output voltage of the energy storage module and an output voltage of a PSE for power supply simultaneously supply power to the central office equipment.

12. The reverse power supply method according to claim 10, **characterized in that**, the number of port state signals of the power supply detection module is identical with the number of the power supply ports, and each of the port state signals is formed by output signals of the PD interface module and the DC/DC module that are connected to a corresponding power supply port;

wherein when the first operation indication signal is at a high level, it is indicated that the central office equipment is in the single-port power supply state; when the second operation indication signal is at a low level, it is indicated that the central office equipment is in the power-down state.

13. The reverse power supply method according to claim 12, **characterized in that**, controlling, by the energy storage module, the output voltage of the energy storage module according to the operation indication signal to supply power to the central office equipment (S120), comprising:

controlling, by the energy storage module, the output voltage of the energy storage module to supply power to the central office equipment when the first operation indication signal is at a high level or the second operation indication signal is at a low level.

14. A computer readable storage medium storing computer executable instructions which, when executed by a processor of a central office equipment (100), execute the reverse power supply method of any one of claims 10-13.


**Patentansprüche**

1. Zentralbürovorrichtung (100), die Folgendes umfasst: ein Stromausgleichsmodul (110), ein Energiespeichermodul (120) und ein Stromversorgungsdetektionsmodul (130), wobei das Stromausgleichsmodul (110) mit mehreren Stromversorgungsports versehen ist, und ein Zentralbüro-Powered-Device- bzw. Zentralbüro-PD-Schnittstellenmodul (112) und ein Gleichstrom-Gleichstrom- bzw. DC/DC-Modul (113), die hintereinander zwischen ein Benutzerendgerät-Power-Sourcing-Equipment bzw. Benutzerendgerät-PSE und jeweils jedem der mehreren Stromversorgungsports geschaltet sind,

wobei das Stromausgleichsmodul (110) dazu ausgelegt ist, eine Quellenstromversorgung von jedem der PSEs, die für eine Umkehrstromversorgung ausgelegt sind, die von der Zentralbürovorrichtung (100) benötigt wird, gleichmäßig an diese zu verteilen;

das Stromversorgungsdetektionsmodul (130) mit dem Energiespeichermodul (120), jeweils jedem der PD-Schnittstellenmodule (112) und jedem der DC/DC-Module (113) verbunden ist; und das Stromversorgungsdetektionsmodul (130) dazu ausgelegt ist, Betriebszustände jedes der PD-Schnittstellenmodule (112) und jedes der DC/DC-Module (113) in Echtzeit zu überwachen und ein Betriebsangabesignal an das Energiespeichermodul (120) auszugeben, wenn überwacht wird, dass sich die Zentralbürovorrichtung (100) in einem Einzelport-Stromversorgungszustand oder einem Ausschaltzustand befindet, wobei das Betriebsangabesignal ein erstes Betriebsangabesignal umfasst, wenn überwacht wird, dass sich die Zentralbürovorrichtung in einem Einzelport-Stromversorgungszustand befindet, und ein zweites Betriebsangabesignal umfasst, wenn überwacht wird, dass sich die Zentralbürovorrichtung in einem Ausschaltzustand befindet; und

das Energiespeichermodul (120) dazu ausgelegt ist, eine Ausgangsspannung des Energiespeichermoduls (120) gemäß dem ersten Betriebsangabesignal oder dem zweiten Betriebsangabesignal zu steuern, um die Zentralbürovorrichtung (100) mit Strom zu versorgen, um zu verhindern, dass die Zentralbürovorrichtung (100) neu startet,

wobei die Zentralbürovorrichtung (100) ferner Folgendes umfasst: eine Zentralverarbeitungseinheit CPU (140), die jeweils mit dem Energiespeichermodul (120) und dem Stromversorgungsdetektionsmodul (130) verbunden ist, **dadurch gekennzeichnet, dass** das Stromversorgungsdetektionsmodul (130) ferner dazu ausgelegt ist, das erste Betriebsangabesignal an die CPU (140) auszugeben, wenn überwacht wird, dass sich die Zentralbürovorrichtung (100) in dem Einzelport-Stromversorgungszustand befindet, und das zweite Betriebsangabesignal an die CPU (140) auszugeben, wenn überwacht wird, dass sich die Zentralbürovorrichtung (100) in dem Ausschaltzustand befindet;

die CPU (140) dazu ausgelegt ist, eine Stromverbrauchsreduzierungsverarbeitung an der Zentralbürovorrichtung (100) gemäß dem ersten Betriebsangabesignal durchzuführen und ein Wiederherstellungssignal an das Energiespeichermodul (120) auszugeben, nachdem die Stromverbrauchsreduzierungsverarbeitung abgeschlossen ist; und das Energiespeichermodul (120) dazu ausgelegt ist, die Ausgangsspannung des Energiespeichermoduls (120) gemäß dem Wiederherstellungssignal zu steuern, um eine Stromversorgung an die Zentralbürovorrichtung (100) zu verhindern;

das Energiespeichermodul (120) ferner dazu ausgelegt ist, Spannung an die Zentralbürovorrichtung (100) auszugeben, und die CPU (140) dazu ausgelegt ist, gemäß dem zweiten Betriebsangabesignal ein Dying Gasp an eine Vorrichtung der oberen Ebene zu melden und relevante Informationen dringend zu speichern.

2. Zentralbürovorrichtung (100) nach Anspruch 1, **dadurch gekennzeichnet, dass** eine Ausgangsspannung des Stromausgleichsmoduls (110) über eine erste Vorspannungseinrichtung (150) mit einer Versorgungsquellenspannung der Zentralbürovorrichtung (100) verbunden ist und die Ausgangsspannung des Energiespeichermoduls (120) über eine zweite Vorspannungseinrichtung (160) mit der Versorgungsquellenspannung der Zentralbürovorrichtung (100) verbunden ist;

wobei das Energiespeichermodul (120) die Ausgangsspannung des Energiespeichermoduls (120) gemäß dem Betriebsangabesignal steuert, um die Zentralbürovorrichtung (100) mit Strom zu versorgen, umfassend:

Durchführen einer Aufwärtswandlungsverarbeitung an der Ausgangsspannung des Energiespeichermoduls (120) gemäß dem Betriebsangabesignal, sodass die zweite Vorspannungseinrichtung (160) eingeschaltet und die erste Vorspannungseinrichtung (150) ausgeschaltet wird, wodurch die Zentralbürovorrichtung (100) durch die Ausgangsspannung des Energiespeichermoduls (120) mit Strom versorgt wird.

3. Zentralbürovorrichtung (100) nach Anspruch 1, **dadurch gekennzeichnet, dass** eine Ausgangsspannung des Stromausgleichsmoduls (110) mit einer Versorgungsquellenspannung der Zentralbürovorrichtung (100) verbunden ist und die Ausgangsspannung des Energiespeichermoduls (120) mit einem Eingangsport des Stromausgleichsmoduls (110) verbunden ist;

wobei das Energiespeichermodul (120) die Ausgangsspannung des Energiespeichermoduls (120) gemäß dem Betriebsangabesignal steuert, um die Zentralbürovorrichtung (100) mit Strom zu versorgen, umfassend:

derartiges Steuern der Ausgangsspannung des Energiespeichermoduls (120) gemäß dem Betriebsangabesignal, dass sie in das Stromausgleichsmodul (110) fließt, sodass die Ausgangsspannung des Energiespeichermoduls (120) und eine Ausgangsspannung eines PSE für die Stromversorgung die Zentralbürovorrichtung (100) gleichzeitig mit Strom versorgen.

4. Zentralbürovorrichtung (100) nach Anspruch 1, **dadurch gekennzeichnet, dass** die Anzahl von Portzustandssignalen des Stromversorgungsdetektionsmoduls (130) identisch mit der Anzahl der Stromversorgungsports ist und jedes der Portzustandssignale durch Ausgangssignale des PD-Schnittstellenmoduls (112) und des DC/DC-Moduls (113) gebildet wird, die mit einem entsprechenden Stromversorgungsport verbunden sind; und

wenn sich das erste Betriebsangabesignal auf einem High-Pegel befindet, angegeben wird, dass sich die Zentralbürovorrichtung (100) in dem Einzelport-Stromversorgungszustand befindet; wenn sich das zweite Betriebsangabesignal auf einem Low-Pegel befindet, angegeben wird, dass sich die Zentralbürovorrichtung (100) in dem Ausschaltzustand befindet.

5. Zentralbürovorrichtung (100) nach Anspruch 4, **dadurch gekennzeichnet, dass** das Energiespeichermodul (120) die Ausgangsspannung des Energiespeichermoduls (120) gemäß dem Betriebsangabesignal steuert, um die Zentralbürovorrichtung (100) mit Strom zu versorgen, umfassend:

Steuern der Ausgangsspannung des Energiespeichermoduls (120), um die Zentralbürovorrichtung (100) mit Strom zu versorgen, wenn sich das erste Betriebsangabesignal auf einem High-Pegel befindet oder sich das zweite Betriebsangabesignal auf einem Low-Pegel befindet.

6. Zentralbürovorrichtung (100) nach Anspruch 4, **dadurch gekennzeichnet, dass** das erste Betriebsangabesignal wie folgt ausgedrückt wird:

$$Y_0 = \overline{Dn}*\overline{Dn-1}*\cdots*\overline{Di}*\cdots*\overline{D3}*\overline{D2}*D1 +$$
$$\overline{Dn}*\overline{Dn-1}*\cdots*\overline{Di}*\cdots*\overline{D3}*D2*\overline{D1} +$$
$$\overline{Dn}*\overline{Dn-1}*\cdots*\overline{Di}*\cdots*D3*\overline{D2}*\overline{D1} +$$
$$\cdots +$$
$$\overline{Dn}*\overline{Dn-1}*\cdots*Di*\cdots*\overline{D3}*\overline{D2}*\overline{D1} + ;$$
$$\cdots +$$
$$\overline{Dn}*Dn-1*\cdots*\overline{Di}*\cdots*\overline{D3}*\overline{D2}*\overline{D1} +$$
$$Dn*\overline{Dn-1}*\cdots*\overline{Di}*\cdots*\overline{D3}*\overline{D2}*\overline{D1} +$$

und das zweite Betriebsangabesignal wie folgt ausgedrückt wird:

$$Y_1 = Dn + Dn - 1 + \cdots + Di + \cdots + D3 + D2 + D1 \; ;$$

wobei Di das Portzustandssignal repräsentiert, das dem i-ten Stromversorgungsport entspricht, und *Di* der Kehrwert von Di ist.

7. Zentralbürovorrichtung (100) nach Anspruch 4, **dadurch gekennzeichnet, dass** das Energiespeichermodul (120) Folgendes umfasst:

   einen Energiespeicherkondensator und einen DC/DC-Aufwärtswandler (122), die jeweils mit einer Ausgangsspannung des Stromausgleichsmoduls (110) verbunden sind, wobei der DC/DC-Aufwärtswandler (122) dazu ausgelegt ist, die Ausgangsspannung des Energiespeichermoduls (120) auszugeben; oder
   einen DC/DC-Aufwärtswandler (122), der mit einer Ausgangsspannung des Stromausgleichsmoduls (110) verbunden ist, und einen Energiespeicherkondensator und einen DC/DC-Abwärtswandler (123), die jeweils mit dem DC/DC-Aufwärtswandler (122) verbunden sind, wobei der DC/DC-Abwärtswandler (123) dazu ausgelegt ist, die Ausgangsspannung des Energiespeichermoduls (120) auszugeben.

8. Zentralbürovorrichtung (100) nach Anspruch 7, **dadurch gekennzeichnet, dass** der DC/DC-Abwärtswandler (123) Folgendes umfasst:

   eine dritte Vorspannungseinrichtung (170), einen ersten Widerstand (R1) und einen zweiten Widerstand (R2), die hintereinander mit einem Ausgangsende des Stromversorgungsdetektionsmoduls (130) verbunden sind, und einen dritten Widerstand (R3), der mit der dritten Vorspannungseinrichtung (170) und dem ersten Widerstand (R1) parallel geschaltet ist, wobei ein Ende der dritten Vorspannungseinrichtung (170) und ein Ende des dritten Widerstands (R3) auf Masse gelegt sind;
   wobei der DC/DC-Abwärtswandler (123) dazu ausgelegt ist, die dritte Vorspannungseinrichtung (170) auszuschalten, wenn sich das erste Betriebsangabesignal auf einem Low-Pegel befindet; und
   wobei der DC/DC-Abwärtswandler (123) ferner dazu ausgelegt ist, die dritte Vorspannungseinrichtung (170) einzuschalten, wenn sich das erste Betriebsangabesignal auf einem High-Pegel befindet.

9. Umkehrstromversorgungssystem (10), das Folgendes umfasst: eine Zentralbürovorrichtung (100) und mindestens ein Benutzerendgerät-Power-Sourcing-Equipment bzw. Benutzerendgerät-PSE (200), das mit der Zentralbürovorrichtung (100) verbunden ist;

   wobei die Zentralbürovorrichtung (100) die Zentralbürovorrichtung nach einem der Ansprüche 1-8 ist; und
   die PSEs (200) jeweils dazu ausgelegt sind, die Zentralbürovorrichtung (100) hinsichtlich einer durch das Stromausgleichsmodul der Zentralbürovorrichtung (100) zugewiesenen Stromversorgung mit Strom zu versorgen.

10. Umkehrstromversorgungsverfahren, das Folgendes umfasst:

Überwachen, in Echtzeit, durch ein Stromversorgungsdetektionsmodul (130), von Betriebszuständen eines Zentralbüro-Powered-Device- bzw. Zentralbüro-PD-Schnittstellenmoduls (112) und eines Gleichstrom-Gleichstrom- bzw. DC/DC-Moduls (113), die mit jedem von mehreren Stromversorgungsports einer Zentralbürovorrichtung (100) verbunden sind, und Ausgeben eines Betriebsangabesignals an ein Energiespeichermodul (120), wenn überwacht wird, dass sich die Zentralbürovorrichtung in einem Einzelport-Stromversorgungszustand oder einem Ausschaltzustand befindet (S110), wobei das Betriebsangabesignal ein erstes Betriebsangabesignal umfasst, wenn überwacht wird, dass sich die Zentralbürovorrichtung in einem Einzelport-Stromversorgungszustand befindet, und ein zweites Betriebsangabesignal umfasst, wenn überwacht wird, dass sich die Zentralbürovorrichtung in einem Ausschaltzustand befindet; und

Steuern, durch das Energiespeichermodul (120), einer Ausgangsspannung des Energiespeichermoduls gemäß dem ersten Betriebsangabesignal oder dem zweiten Betriebsangabesignal, um die Zentralbürovorrichtung mit Strom zu versorgen (S120), um zu verhindern, dass die Zentralbürovorrichtung (100) neu startet, wobei die Zentralbürovorrichtung (100) ein Stromausgleichsmodul (110), das Energiespeichermodul (120), das Stromversorgungsdetektionsmodul (130) und eine Zentralverarbeitungseinheit CPU (140) umfasst, die jeweils mit dem Energiespeichermodul (120) und dem Stromversorgungsdetektionsmodul (130) verbunden sind, und wobei das Stromausgleichsmodul (110) mit den mehreren Stromversorgungsports versehen ist und ein Zentralbüro-PD-Schnittstellenmodul (112) und ein DC/DC-Modul (113) hintereinander zwischen ein Benutzerendgerät-Power-Sourcing-Equipment bzw. Benutzerendgerät-PSE und jeweils jedem der mehreren Stromversorgungsports geschaltet sind,

**dadurch gekennzeichnet, dass** das Umkehrstromversorgungsverfahren ferner Folgendes umfasst:

Ausgeben, durch das Stromversorgungsdetektionsmodul, des ersten Betriebsangabesignals an die Zentralverarbeitungseinheit CPU, wenn überwacht wird, dass sich die Zentralbürovorrichtung in dem Einzelport-Stromversorgungszustand befindet, oder des zweiten Betriebsangabesignals an die CPU, wenn überwacht wird, dass sich die Zentralbürovorrichtung in dem Ausschaltzustand befindet;

Durchführen, durch die CPU, einer Stromverbrauchsreduzierungsverarbeitung an der Zentralbürovorrichtung gemäß dem ersten Betriebsangabesignal und Ausgeben eines Wiederherstellungssignals an das Energiespeichermodul, nachdem die Stromverbrauchsreduzierungsverarbeitung abgeschlossen ist (S130);

Steuern, durch das Energiespeichermodul, der Ausgangsspannung des Energiespeichermoduls gemäß dem Wiederherstellungssignal, um eine Stromversorgung an die Zentralbürovorrichtung zu verhindern (S140),

wobei das Umkehrstromversorgungsverfahren ferner Folgendes umfasst:

Ausgeben, durch das Energiespeichermodul (120), einer Spannung an die Zentralbürovorrichtung (100) Melden eines Dying Gasp an eine Vorrichtung der oberen Ebene und dringendes Speichern relevanter Informationen durch die CPU (140) gemäß dem zweiten Betriebsangabesignal.

**11.** Umkehrstromversorgungsverfahren nach Anspruch 10, **dadurch gekennzeichnet, dass** das Steuern, durch das Energiespeichermodul, der Ausgangsspannung des Energiespeichermoduls gemäß dem Betriebsangabesignal, um die Zentralbürovorrichtung mit Strom zu versorgen (S120), Folgendes umfasst:

Durchführen, durch das Energiespeichermodul, einer Aufwärtswandlungsverarbeitung an der Ausgangsspannung des Energiespeichermoduls gemäß dem Betriebsangabesignal, um die Zentralbürovorrichtung durch die Ausgangsspannung des Energiespeichermoduls mit Strom zu versorgen; oder

derartiges Steuern, durch das Energiespeichermodul, der Ausgangsspannung des Energiespeichermoduls gemäß dem Betriebsangabesignal, dass sie in das Stromausgleichsmodul fließt, sodass die Ausgangsspannung des Energiespeichermoduls und eine Ausgangsspannung eines PSE für die Stromversorgung die Zentralbürovorrichtung gleichzeitig mit Strom versorgen.

**12.** Umkehrstromversorgungsverfahren nach Anspruch 10, **dadurch gekennzeichnet, dass** die Anzahl von Portzustandssignalen des Stromversorgungsdetektionsmoduls identisch mit der Anzahl der Stromversorgungsports ist und jedes der Portzustandssignale durch Ausgangssignale des PD-Schnittstellenmoduls und des DC/DC-Moduls gebildet wird, die mit einem entsprechenden Stromversorgungsport verbunden sind; wobei, wenn sich das erste Betriebsangabesignal auf einem High-Pegel befindet, angegeben wird, dass sich die Zentralbürovorrichtung in dem Einzelport-Stromversorgungszustand befindet; wenn sich das zweite Betriebsangabesignal auf einem Low-Pegel befindet, angegeben wird, dass sich die Zentralbürovorrichtung in dem Ausschaltzustand befindet.

**13.** Umkehrstromversorgungsverfahren nach Anspruch 12, **dadurch gekennzeichnet, dass** das Steuern, durch das Energiespeichermodul, der Ausgangsspannung des Energiespeichermoduls gemäß dem Betriebsangabesignal, um die Zentralbürovorrichtung mit Strom zu versorgen (S120), Folgendes umfasst:
Steuern, durch das Energiespeichermodul, der Ausgangsspannung des Energiespeichermoduls, um die Zentralbürovorrichtung mit Strom zu versorgen, wenn sich das erste Betriebsangabesignal auf einem High-Pegel befindet oder sich das zweite Betriebsangabesignal auf einem Low-Pegel befindet.

**14.** Computerlesbares Speichermedium, das computerausführbare Anweisungen speichert, die bei Ausführung durch einen Prozessor einer Zentralbürovorrichtung (100) das Umkehrstromversorgungsverfahren nach einem der Ansprüche 10-13 ausführen.

**Revendications**

**1.** Équipement de central (100), comprenant : un module d'égalisation de courant (110), un module de stockage d'énergie (120) et un module de détection d'alimentation (130), le module d'égalisation de courant (110) étant pourvu d'une pluralité de ports d'alimentation, et un module d'interface (112) de dispositif alimenté, PD, de central et un module courant continu-courant continu, CC/CC, (113), étant connectés séquentiellement entre un équipement d'approvisionnement en puissance, PSE, de terminal utilisateur, et chacun de la pluralité de ports d'alimentation, respectivement,

dans lequel le module d'égalisation de courant (110) est configuré pour distribuer uniformément une puissance de source, provenant de chacun des PSE qui sont configurés pour une alimentation inverse, requise par et vers l'équipement de central (100) ;
le module de détection d'alimentation (130) est connecté au module de stockage d'énergie (120), à chacun des modules d'interface (112) PD et à chacun des modules CC/CC (113), respectivement ; et le module de détection d'alimentation (130) est configuré pour surveiller, en temps réel, des états de fonctionnement de chacun des modules d'interface (112) PD et de chacun des modules CC/CC (113), et délivrer un signal d'indication de fonctionnement au module de stockage d'énergie (120) lorsqu'il est surveillé que l'équipement de central (100) est dans un état d'alimentation à port unique ou dans un état hors tension, le signal d'indication de fonctionnement comprend un premier signal d'indication de fonctionnement lorsqu'il est surveillé que l'équipement de central est dans un état d'alimentation à port unique et un deuxième signal d'indication de fonctionnement lorsqu'il est surveillé que l'équipement de central est dans un état hors tension ; et
le module de stockage d'énergie (120) est configuré pour commander une tension de sortie du module de stockage d'énergie (120), en fonction du premier signal d'indication de fonctionnement ou du deuxième signal d'indication de fonctionnement, afin d'alimenter l'équipement de central (100) de manière à empêcher l'équipement de central (100) de redémarrer,
dans lequel l'équipement de central (100) comprend en outre : une unité centrale de traitement CPU (140) connectée respectivement au module de stockage d'énergie (120) et au module de détection d'alimentation (130), **caractérisé en ce que**, le module de détection d'alimentation (130) est en outre configuré pour délivrer le premier signal d'indication de fonctionnement à la CPU (140) lorsqu'il est surveillé que l'équipement de central (100) est dans l'état d'alimentation à port unique et le deuxième signal d'indication de fonctionnement à la CPU (140) lorsqu'il est surveillé que l'équipement de central (100) est dans l'état hors tension ;
la CPU (140) est configurée pour réaliser un traitement de réduction de consommation d'énergie sur l'équipement de central (100) en fonction du premier signal d'indication de fonctionnement, et délivrer un signal de récupération au module de stockage d'énergie (120) après la fin du traitement de réduction de la consommation ; et le module de stockage d'énergie (120) est configuré pour commander la tension de sortie du module de stockage d'énergie (120), en fonction du signal de récupération, afin d'interdire l'alimentation de l'équipement de central (100) ;
le module de stockage d'énergie (120) est en outre configuré pour délivrer une tension à l'équipement de central (100), et la CPU (140) est configurée pour signaler un dying gasp (message de dernier soupir) à un équipement de niveau supérieur et pour sauvegarder d'urgence des informations pertinentes, en fonction du deuxième signal d'indication de fonctionnement.

**2.** Équipement de central (100) selon la revendication 1, **caractérisé en ce qu'**une tension de sortie du module d'égalisation de courant (110) est connectée à une tension de source d'alimentation de l'équipement de central (100) par l'intermédiaire d'un premier dispositif de polarisation (150), et la tension de sortie du module de stockage d'énergie (120) est connectée à la tension de source d'alimentation de l'équipement de central (100) par l'intermédiaire d'un deuxième dispositif de polarisation (160) ;

dans lequel le module de stockage d'énergie (120) commande la tension de sortie du module de stockage d'énergie (120), en fonction du signal d'indication de fonctionnement, pour alimenter l'équipement de central (100), comprenant :

la réalisation d'un traitement d'amplification de la tension de sortie du module de stockage d'énergie (120) en fonction du signal d'indication de fonctionnement de sorte que le deuxième dispositif de polarisation (160) est activé et le premier dispositif de polarisation (150) est désactivé, au moyen duquel l'équipement de central (100) est alimenté en puissance par la tension de sortie du module de stockage d'énergie (120).

3. Équipement de central (100) selon la revendication 1, **caractérisé en ce que**, une tension de sortie du module d'égalisation de courant (110) est connectée à une tension de source d'alimentation de l'équipement de central (100), et la tension de sortie du module de stockage d'énergie (120) est connectée à un port d'entrée du module d'égalisation de courant (110) ;

dans lequel le module de stockage d'énergie (120) commande la tension de sortie du module de stockage d'énergie (120), en fonction du signal d'indication de fonctionnement, pour alimenter l'équipement de central (100), comprenant :

la commande de la tension de sortie du module de stockage d'énergie (120), en fonction du signal d'indication de fonctionnement, pour qu'elle circule dans le module d'égalisation de courant (110) de sorte que la tension de sortie du module de stockage d'énergie (120) et une tension de sortie d'un PSE pour une alimentation alimentent simultanément l'équipement de central (100).

4. Équipement de central (100) selon la revendication 1, **caractérisé en ce que** le nombre de signaux d'état de port du module de détection d'alimentation (130) est identique au nombre de ports d'alimentation, et chacun des signaux d'état de port est formé par des signaux de sortie du module d'interface (112) PD et du module CC/CC (113) qui sont connectés à un port d'alimentation correspondant ; et

lorsque le premier signal d'indication de fonctionnement est à un niveau haut, il est indiqué que l'équipement de central (100) est dans l'état d'alimentation à port unique ; lorsque le deuxième signal d'indication de fonctionnement est à un niveau bas, il est indiqué que l'équipement de central (100) est dans l'état hors tension.

5. Équipement de central (100) selon la revendication 4, **caractérisé en ce que** le module de stockage d'énergie (120) commande la tension de sortie du module de stockage d'énergie (120), en fonction du signal d'indication de fonctionnement, pour alimenter l'équipement de central (100), comprenant :

la commande de la tension de sortie du module de stockage d'énergie (120) pour alimenter l'équipement de central (100) lorsque le premier signal d'indication de fonctionnement est à un niveau haut ou lorsque le deuxième signal d'indication de fonctionnement est à un niveau bas.

6. Équipement de central (100) selon la revendication 4, **caractérisé en ce que** le premier signal d'indication de fonctionnement est exprimé comme suit :

$$Y_0 = \overline{Dn} * \overline{Dn-1} * \cdots * \overline{Di} * \cdots * \overline{D3} * \overline{D2} * D1 +$$
$$\overline{Dn} * \overline{Dn-1} * \cdots * \overline{Di} * \cdots * \overline{D3} * D2 * \overline{D1} +$$
$$\overline{Dn} * \overline{Dn-1} * \cdots * \overline{Di} * \cdots * D3 * \overline{D2} * \overline{D1} +$$
$$\cdots +$$
$$\overline{Dn} * \overline{Dn-1} * \cdots * Di * \cdots * \overline{D3} * \overline{D2} * \overline{D1} + ;$$
$$\cdots +$$
$$\overline{Dn} * Dn-1 * \cdots * \overline{Di} * \cdots * \overline{D3} * \overline{D2} * \overline{D1} +$$
$$Dn * \overline{Dn-1} * \cdots * \overline{Di} * \cdots * \overline{D3} * \overline{D2} * \overline{D1} +$$

et le deuxième signal d'indication de fonctionnement est exprimé comme suit :

$$Y_1 = Dn + Dn-1 + \cdots + Di + \cdots + D3 + D2 + D1 ;$$

où Di représente le signal d'état de port correspondant au i$^{ème}$ port d'alimentation, et $\overline{Di}$ est l'inverse de Di.

7. Équipement de central (100) selon la revendication 4, **caractérisé en ce que** le module de stockage d'énergie (120) comprend :

un condensateur de stockage d'énergie et un convertisseur élévateur CC/CC (122) respectivement connectés à une tension de sortie du module d'égalisation de courant (110), le convertisseur élévateur CC/CC (122) étant configuré pour délivrer la tension de sortie du module de stockage d'énergie (120) ; ou

un convertisseur élévateur CC/CC (122) connecté à une tension de sortie du module d'égalisation de courant (110), et un condensateur de stockage d'énergie et un convertisseur abaisseur CC/CC (123) connectés respectivement au convertisseur élévateur CC/CC (122), le convertisseur abaisseur CC/CC (123) étant configuré pour délivrer la tension de sortie du module de stockage d'énergie (120).

8. Équipement de central (100) selon la revendication 7, **caractérisé en ce que** le convertisseur abaisseur CC/CC (123) comprend :

un troisième dispositif de polarisation (170), une première résistance (R1) et une deuxième résistance (R2) qui sont connectés séquentiellement à une extrémité de sortie du module de détection d'alimentation (130), et une troisième résistance (R3) connectée en parallèle avec le troisième dispositif de polarisation (170) et la première résistance (R1), une extrémité du troisième dispositif de polarisation (170) et une extrémité de la troisième résistance (R3) étant mises à la terre ;

le convertisseur abaisseur CC/CC (123) est configuré pour désactiver le troisième dispositif de polarisation (170) lorsque le premier signal d'indication de fonctionnement est à un niveau bas ; et

le convertisseur abaisseur CC/CC (123) est en outre configuré pour activer le troisième dispositif de polarisation (170) lorsque le premier signal d'indication de fonctionnement est à un niveau haut.

9. Système d'alimentation inverse (10), comprenant :

un équipement de central (100), et au moins un équipement d'approvisionnement en puissance, PSE, de terminal utilisateur (200) connecté à l'équipement de central (100) ;

dans lequel l'équipement de central (100) est l'équipement de central selon l'une quelconque des revendications 1 à 8 ; et

chacun des PSE (200) est configuré pour alimenter l'équipement de central (100) en matière de puissance allouée par le module d'égalisation de courant de l'équipement de central (100).

10. Procédé d'alimentation inverse, comprenant :

la surveillance, en temps réel, par un module de détection d'alimentation (130), d'états de fonctionnement d'un module d'interface (112) de dispositif alimenté, PD, de central et d'un module courant continu-courant continu, CC/CC, (113) connecté à chacun d'une pluralité de ports d'alimentation d'un équipement de central (100), et la délivrance d'un signal d'indication de fonctionnement à un module de stockage d'énergie (120) lorsqu'il est surveillé que l'équipement de central se trouve dans un état d'alimentation à port unique ou dans un état hors tension (S110), le signal d'indication de fonctionnement comprenant un premier signal d'indication de fonctionnement lorsqu'il est surveillé que l'équipement de central se trouve dans un état d'alimentation à port unique et un deuxième signal d'indication de fonctionnement lorsqu'il est indiqué que l'équipement de central se trouve dans un état hors tension ; et

la commande, par le module de stockage d'énergie (120), d'une tension de sortie du module de stockage d'énergie en fonction du premier signal d'indication de fonctionnement ou du deuxième signal d'indication de fonctionnement pour alimenter l'équipement de central (S120) de manière à empêcher le redémarrage de l'équipement de central (100),

dans lequel l'équipement de central (100) comprend un module d'égalisation de courant (110), le module de stockage d'énergie (120), le module de détection d'alimentation (130) et une unité centrale de traitement CPU (140) connectés respectivement au module de stockage d'énergie (120) et au module de détection d'alimentation (130), et dans lequel le module d'égalisation de courant (110) est pourvu de la pluralité de ports d'alimentation, un module d'interface (112) PD de central et un module CC/CC (113) sont connectés séquentiellement entre un équipement d'approvisionnement en puissance, PSE, de terminal utilisateur et chacun de la pluralité de ports d'alimentation, respectivement,

**caractérisé en ce que** le procédé d'alimentation inverse comprend en outre :

la délivrance, par le module de détection d'alimentation, du premier signal d'indication de fonctionnement à l'unité centrale de traitement CPU lorsqu'il est surveillé que l'équipement de central est dans l'état d'alimentation à port unique ou du deuxième signal d'indication de fonctionnement à la CPU lorsqu'il est surveillé que l'équipement de central est dans l'état hors tension ;

la réalisation, par la CPU, d'un traitement de réduction de consommation d'énergie sur l'équipement de central en fonction du premier signal d'indication de fonctionnement, et la délivrance d'un signal de récupération au module de stockage d'énergie après la fin du traitement de réduction de consommation d'énergie (S130) ;

la commande, par le module de stockage d'énergie, de la tension de sortie du module de stockage d'énergie en fonction du signal de récupération pour interdire l'alimentation de l'équipement de central (S140),

dans lequel le procédé d'alimentation inverse comprend en outre :

la fourniture, par le module de stockage d'énergie (120), d'une tension à l'équipement de central (100), et le signalement d'un dying gasp (message de dernier soupir) à un équipement de niveau supérieur et la sauvegarde d'urgence d'informations pertinentes, par la CPU (140), en fonction du deuxième signal d'indication de fonctionnement.

**11.** Procédé d'alimentation inverse selon la revendication 10, **caractérisé en ce que**, la commande, par le module de stockage d'énergie, de la tension de sortie du module de stockage d'énergie en fonction du signal d'indication de fonctionnement pour alimenter l'équipement de central (S120), comprenant :

la réalisation, par le module de stockage d'énergie, d'un traitement d'amplification de la tension de sortie du module de stockage d'énergie en fonction du signal d'indication de fonctionnement pour alimenter l'équipement de central par l'intermédiaire de la tension de sortie du module de stockage d'énergie ; ou

la commande, par le module de stockage d'énergie, de la tension de sortie du module de stockage d'énergie en fonction du signal d'indication de fonctionnement pour qu'elle circule dans le module d'égalisation de courant de sorte que la tension de sortie du module de stockage d'énergie et une tension de sortie d'un PSE pour une alimentation alimentent simultanément l'équipement de central.

**12.** Procédé d'alimentation inverse selon la revendication 10, **caractérisé en ce que** le nombre de signaux d'état de port du module de détection d'alimentation est identique au nombre de ports d'alimentation, et chacun des signaux d'état de port est formé par des signaux de sortie du module d'interface PD et du module CC/CC qui sont connectés à un port d'alimentation correspondant ;

dans lequel lorsque le premier signal d'indication de fonctionnement est à un niveau haut, il est indiqué que l'équipement de central est dans l'état d'alimentation à port unique ; lorsque le deuxième signal d'indication de fonctionnement est à un niveau bas, il est indiqué que l'équipement de central est dans l'état hors tension.

**13.** Procédé d'alimentation inverse selon la revendication 12, **caractérisé en ce que**, la commande, par le module de stockage d'énergie, de la tension de sortie du module de stockage d'énergie en fonction du signal d'indication de fonctionnement pour alimenter l'équipement de central (S120), comprenant :

la commande, par le module de stockage d'énergie, de la tension de sortie du module de stockage d'énergie pour alimenter l'équipement de central lorsque le premier signal d'indication de fonctionnement est à un niveau haut ou que le deuxième signal d'indication de fonctionnement est à un niveau bas.

**14.** Support de stockage lisible par ordinateur stockant des instructions exécutables par ordinateur qui, lorsqu'elles sont exécutées par un processeur d'un équipement de central (100), exécutent le procédé d'alimentation inverse selon l'une quelconque des revendications 10 à 13.

**Fig. 1**

Fig. 2

Fig. 3

Fig. 4

Fig. 5

$$Y_0 = \overline{Dn} * \overline{Dn-1} * \cdots * \overline{Di} * \cdots * \overline{D3} * \overline{D2} * D1 +$$
$$\overline{Dn} * \overline{Dn-1} * \cdots * \overline{Di} * \cdots * \overline{D3} * D2 * \overline{D1} +$$
$$\overline{Dn} * \overline{Dn-1} * \cdots * \overline{Di} * \cdots * D3 * \overline{D2} * \overline{D1} +$$
$$\cdots +$$
$$\overline{Dn} * \overline{Dn-1} * \cdots * Di * \cdots * \overline{D3} * \overline{D2} * \overline{D1} +$$
$$\cdots +$$
$$\overline{Dn} * Dn-1 * \cdots * \overline{Di} * \cdots * \overline{D3} * \overline{D2} * \overline{D1} +$$
$$Dn * \overline{Dn-1} * \cdots * \overline{Di} * \cdots * \overline{D3} * \overline{D2} * \overline{D1} +$$

Inputs: D1, D2, D3, ......, Dn 1, Dn

Y0=1 represents:
Single-port power supply state

$$Y_1 = Dn + Dn-1 + \cdots + Di + \cdots + D3 + D2 + D1$$

Y1=0 represents:
Central office equipment is in a power-down state

Fig. 6

V1 — [DC/DC Boost Converter 122] — V2

121

Fig. 7

Fig. 8

Fig. 9

Reverse Power Supply System 10

PSE200

PSE200

......

PSE200

Central Office Equipment 100

Fig. 10

Monitor, in real time, by a power supply detection module, operation statuses of a PD interface module and a DC/DC module connected with each power supply port of central office equipment, and output an operation indication signal to an energy storage module when it is monitored that the central office equipment is in a single-port power supply state or a power-down state

S110

Control, by an energy storage module, an output voltage of the energy storage module according to the operation indication signal so as to supply power to the central office equipment

S120

Fig. 11

Monitor, in real time, by a power supply detection module, operation statuses of a PD interface module and a DC/DC module connected with each power supply port of central office equipment, and output an operation indication signal respectively to an energy storage module and the CPU when it is monitored that the central office equipment is in a single-port power supply state or a power-down state $\sim$ S110

Control, by an energy storage module, an output voltage of the energy storage module according to the operation indication signal so as to supply power to the central office equipment $\sim$ S120

Perform, by the CPU, a power consumption reduction processing on the central office equipment according to the operation indication signal, and output a recovery signal to the energy storage module after the power consumption reduction processing is completed $\sim$ S130

Control, by the energy storage module, the output voltage of the energy storage module according to the recovery signal so as to prohibit power supply to the central office equipment $\sim$ S140

Fig.12

**REFERENCES CITED IN THE DESCRIPTION**

**Patent documents cited in the description**

- EP 2911339 A
- EP 3089438 A1
- CN 102571502 A
- US 2016309045 A1
- EP 2773063 A1
- EP 2830302 A1